# EUROPEAN PATENT SPECIFICATION

(11) **EP 3 315 529 B1**
(45) Date of publication and mention of the grant of the patent: **04.12.2019**
(21) Application number: 16196376.4
(22) Date of filing: 28.10.2016
(51) Int. Cl.: C08G 18/76, C08G 18/79, C08G 18/00

(54) **COPOLYMER HYBRID AEROGELS BASED ON ISOCYANATE - CYCLIC ETHER - CLAY NETWORKS**
COPOLYMER HYBRID AEROGELE AUF BASIS VON ISOCYANAT - CYCLISCHEM ETHER - TON NETZWERKEN
COPOLYMÈRE HYBRIDE AÉROGEL AU BASE DE ISOCYANATE - ÉTHER CYCLIQUE - ARGILE RÉSEAU

(43) Date of publication of application: 02.05.2018
(73) Proprietor: Henkel AG & Co. KGaA, 40589 Düsseldorf (DE); Henkel IP & Holding GmbH, 40589 Düsseldorf (DE)
(72) Inventor: DE SANTO, Ilaria, 80125 Napoli (IT); SAKALYTE, Asta, 43130 San Salvador (Tarragona) (ES); DEL SAZ-OROZCO, Belén, 28232 Madrid (ES); TORRES CANO, Elisabet, 08022 Barcelona (ES); SALHI, Fouad, 01893 Bellaterra Barcelona (ES)

(56) References cited:
- US-A1- 2006 281 825

## Description

### TECHNICAL FIELD

The present invention relates to an aerogel obtained by reacting silanol moieties on a surface of a clay; an isocyanate compound A; an isocyanate compound B; a cyclic ether compound; a solvent A; and a solvent B. Aerogels according to the present invention have good mechanical properties and good thermal insulation properties.

### BACKGROUND

Aerogels are synthetic porous materials discovered by Kistler while trying to replace the solvent of a wet gel to a gas without causing shrinkage. Since then, several different materials and drying techniques have been investigated in order to simplify production process and to modify aerogels to be suitable for different applications.

Traditional thermal insulators are vastly based on fiberglass, mineral wool, cellulose, extruded or expanded polystyrene and polyurethane foams. Despite their low manufacturing costs, these insulation materials have certain limitations in performance. Aerogels, on the other hand, are produced by a different process, which leads to materials with a well-developed nanostructure, having noticeably smaller pores than those present in the traditional insulators. For this reason, aerogels outperform traditional thermal insulation materials.

Global market for thermal insulation is driven by strong focus on energy savings and growing awareness of the importance of insulation to improve industrial, domestic and transportation efficiencies. In some applications, it is possible to use a thick insulator panel to reduce the heat transfer. However, other applications may require thinner insulating layers because of size limitations. In these cases, the thermal conductivity of the material has to be extremely low in order to get the same insulating properties with a thinner layer. Aerogels are lightweight materials that show the lowest thermal conductivity of the thermal insulators currently in the market. Thus, thickness of the insulating layer can be reduced compared to a traditional insulating material, while obtaining corresponding insulating properties. Additionally, in some cases and depending on the application, high mechanical properties are also required.

Most known aerogels are inorganic aerogels. Inorganic aerogels (which are mainly based on silica) display very good thermal insulating properties, however, they are very brittle and present significant dustiness. Low mechanical properties of silica based aerogels are generally attributed to the well-defined narrow inter-particle necks. On the other hand, organic aerogels are robust and mechanically stable, which represents an advantage for many applications. However, their thermal insulating properties are not as good as those of silica based aerogels. Despite of their high thermal insulating properties, a slow commercialization has been observed for inorganic aerogels due to their fragility and poor mechanical properties.

Organic aerogels emerged in the 1990's, and are based on polymeric networks, which are formed by cross-linking organic building blocks in a solution to yield a gel. First organic aerogels were based on phenol-formaldehyde resins, which can also be used to prepare carbon aerogels by pyrolysis. Other important materials to form organic aerogels are polyimides, polyamides and polyureas. Currently, numerous aerogels have also been made from biopolymers such as cellulose. Although these materials are normally more durable and have better mechanical properties, they show worse thermal insulating performance than silica based aerogels.

Hybrid aerogels take advantage of both approaches. Up to date, there is a broad aerogel landscape based on different strategies to reinforce inorganic materials. Different attempts to combine the low thermal conductivity of inorganic aerogels with the good mechanical properties of organic aerogels have been described. For example, by cross-linking these silica aerogels with organic polymers or by post-gelation casting of a polymer coating over the entire internal porous surface of the wet-gel nanostructure. In this sense, silica based aerogels were reinforced with isocyanate by reacting the -OH functionalized surface of the silica particles with the isocyanate, obtaining polyurethane. By these means, the mechanical properties were increased up to 300 times over pure silica aerogels while the density multiplied by three. In a similar manner, amino-functionalized silica aerogels were cross-linked with isocyanate, obtaining a polyurea. These polymer cross-linked aerogels tried to combine good mechanical properties, while maintaining low thermal conductivity. In addition, polyimide based aerogels have been prepared with amino-functionalized polysilsesquiloxanes, providing materials with as high as or higher modulus than previously reported silica-reinforced materials. Another approach involves the cross-linking of clay powders with polymeric chains in order to obtain a self-standing structure, which can then be dried to yield porous structures.

In addition to above, the incorporation of poly(dimethyl siloxane) monomers into alkoxysiloxane reaction blends was carried out, obtaining inorganic materials with soft and hard segments.

Another strategy is to copolymerize different materials having different material properties together. Indeed, copolymerization of several polymers is a technique employed to improve the properties of the final polymeric network based on the combination of the properties of the different monomers taking place in the reaction. For example, the crosslinking of polyimide through urea linkages obtaining a copolymer of polyamide and urea. Crosslinked polyamide-urea aerogel have demonstrated to have increased flexibility compared to polyamide aerogel due to the presence of urea linkages. In addition, a low shrinkage was demonstrated. As a drawback, the synthesis requires customized reactants and implies several steps. Another example is the crosslinking of benzoxazines with other monomers to get polybenzoxazine-copolymer aerogels. Mixtures of benzoxazines and co-monomers such as epoxy resins, dianhydrides, dicarboxylic acids and diisocyanates have been synthetized. The resulting aerogels have reduced brittleness compared to neat polybenzoxazine aerogels. However, relative long reaction time and high temperatures are required to obtain these aerogels.

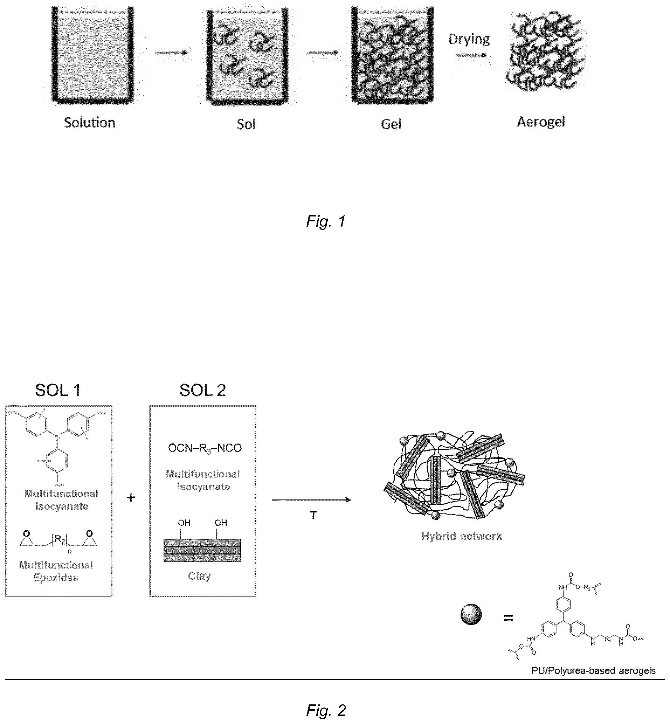

Different drying techniques have also been investigated to obtain porous structures from sol-gel chemistry (figure 1 illustrates the steps in the formation of an aerogel). These drying processes can be classified as sub- and supercritical drying techniques. The main method for subcritical drying is ambient drying, which requires selection of appropriate solvents and temperature conditions. The most effective drying method is supercritical drying, which overcomes the problems of the subcritical drying. The process takes advantage of removing the initial solvent by using a supercritical fluid. By these means, the capillary forces exerted by the solvent due to its evaporation are minimized, and structures with large internal void spaces are achieved.

Although all above strategies resulted in a remarkable enhancement of the properties of the aerogels, there is still a need for aerogels, which have excellent thermal insulation properties, while mechanical properties are improved.

### SHORT DESCRIPTION OF FIGURES

Figure 1 illustrates the steps of the formation of an aerogel.
Figure 2 illustrates the formation of an aerogel according to the present invention.

### SUMMARY OF THE INVENTION

The present invention relates to an aerogel obtained by reacting silanol moieties on a surface of a clay; an isocyanate compound A; an isocyanate compound B; a cyclic ether compound; a solvent A; and a solvent B.

The present invention also relates to a thermal insulating material and/or an acoustic insulating material comprising an aerogel according to the present invention.

The present invention encompasses the use of an aerogel according to the present invention as a thermal insulating material and/or acoustic insulating material.

The present invention also encompasses a method for preparing an aerogel according to the present invention comprising the steps of: 1) adding a clay into the mixture of solvent A and solvent B and mixing at high shear rates; 2) dissolving a cyclic ether compound into the mixture prepared in step 1; 3) adding an isocyanate compound B and mixing; 4) adding an isocyanate compound A and mixing; 5) adding a catalyst, if present and mixing; 6) letting the mixture to stand in order to form a gel; 7) exchanging the solvent of said gel with a solvent; and 8) drying said gel by supercritical or ambient drying.

### DETAILED DESCRIPTION OF THE INVENTION

In the following passages the present invention is described in more detail.

In the context of the present invention, the terms used are to be construed in accordance with the following definitions, unless a context dictates otherwise.

As used herein, the singular forms "a", "an" and "the" include both singular and plural referents unless the context clearly dictates otherwise.

All percentages, parts, proportions and then like mentioned herein are based on weight unless otherwise indicated.

Unless otherwise defined, all terms used in disclosing the invention, including technical and scientific terms, have the meaning as commonly understood by one of the ordinary skill in the art to which this invention belongs to. By means of further guidance, term definitions are included to better appreciate the teaching of the present invention.

The aim of the present invention is to provide an aerogel material that overcomes the fragility of the inorganic aerogels, while maintaining its good thermal insulation properties. In the method according to the present invention, the gelation is carried out by reacting polyisocyanates with cyclic ether groups and polyisocyanates with silanol moieties on a surface of a clay. The resulting co-polymeric 3D network shows a combination of the properties of organic and inorganic materials. Aerogels according to the present invention have a good thermal performance, together with adjustable mechanical properties and non-existent dustiness.

In addition, morphology of the aerogels according to the present invention can be modified, by adjusting the ratio of the chemistries used. For example organic aerogels based on isocyanate and cyclic ether polymer networks have a globular morphology, wherein said particles are of nanometric size. On the other hand hybrid aerogels obtained by reacting an isocyanate compound and a clay in a presence of a solvent show a fibrillary structure of interconnected nanometric fibres.

Furthermore, aerogels according to the present invention can be easily reinforced with different materials due to the mild gelation conditions needed to prepare them.

By the term "wet gel" is meant herein a gel, which is obtained after mixing and reacting the reagents, while the solvent has not yet been extracted by supercritical conditions.

By the term "aerogel" is meant herein a material obtained after drying the solvent of the wet gel under supercritical conditions.

An aerogel according to the present invention is obtained by reacting silanol moieties on a surface of a clay; an isocyanate compound A; an isocyanate compound B; a cyclic ether compound; a solvent A; and a solvent B.

An isocyanate compound B reacts with the silanol moieties on a surface of a clay to form polyurethane components. Although, it may also form polyurea and polyisocyanurate components, however, in a lesser extent as a side reaction. On the other hand, an isocyanate compound A reacts with a cyclic ether compound to form a polyurethane, which is part of the copolymer hybrid network of the aerogel according to the present invention.

Figure 2 illustrates the formation of an aerogel according to the present invention. More specifically figure 2 illustrates how solution A and solution B are mixed in different volumetric ratios and subsequently a hybrid network of polyurethane and polyurea in a lesser extent is obtained.

Suitable isocyanate compound A and isocyanate compound B for use in the present invention are independently an aromatic isocyanate compound or an aliphatic isocyanate compound. Preferably, said isocyanate compound A is an aromatic isocyanate compound and said isocyanate compound B is an aliphatic isocyanate compound.

The reactivity of the aliphatic isocyanate compound B (aliphatic) to the epoxy compound is low, therefore, it is expected that most of isocyanate compound A (aromatic) is reacting with the epoxy, whereas most of the isocyanate compound B is reacting with the silanol moieties on a surface of a clay. However, the reaction of the aromatic isocyanate compound A to the clay is also possible, however only as a small side reaction.

Suitable isocyanate compound A and isocyanate compound B for use in the present invention are independently selected from the group consisting of

OCN-R¹-NCO (1)

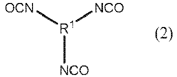

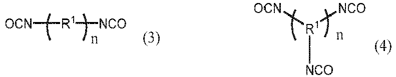

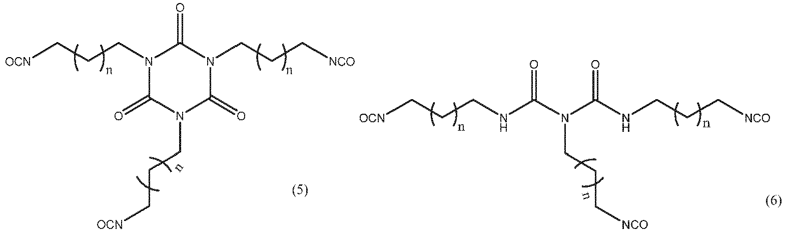

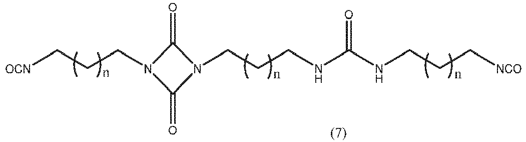

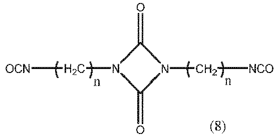

wherein R¹ is selected from the group consisting of a single bonded -O-, -S-, -C(O)-, -S(O)₂-, -S(PO₃)-, a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group and a combination of thereof; and an integer n is from 1 to 30; 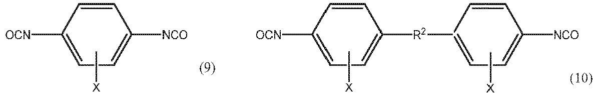 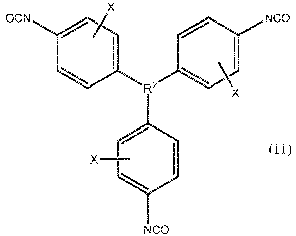 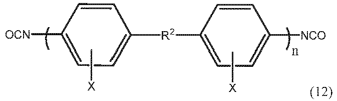 wherein X represents a substituent, or different substituents and are selected independently from the group consisting of hydrogen, halogen and linear or branched C1-C6 alkyl groups, attached on their respective phenyl ring at the 2-position, 3-position or 4-position, and their respective isomers, and R² is selected from the group consisting of a single bonded -O-, - S-, -C(O)-, -S(O)₂-, -S(PO₃)-, a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group from and a combination of thereof; and an integer n is from 1 to 30; 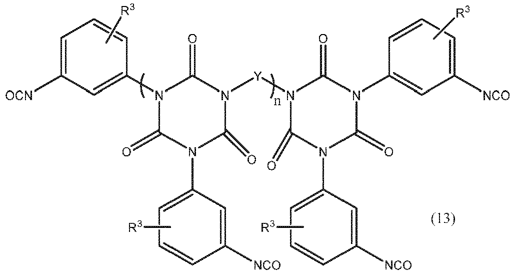 wherein R³ is selected independently from the group consisting of alkyl, hydrogen and alkenyl, and Y is selected from the group consisting of 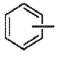 and 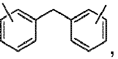 and n is an integer from 0 to 3; 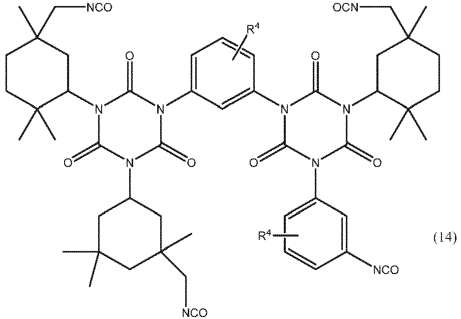 wherein R⁴ is selected independently from the group consisting of alkyl, hydrogen and alkenyl.

Preferably isocyanate compound A and isocyanate compound B are independently selected from the group consisting of 1,3,5-tris(6-isocyanatohexyl)-1,3,5-triazinane-2,4,6-trione, 6-[3-(6-isocyanatohexyl)-2,4-dioxo-1,3-diazetidin-1-yl]hexyl N-(6-isocyanatohexyl) carbamate, 1,6-diisocyanatohexane, methylene diphenyl diisocyanate, 1-[bis(4-isocyanatophenyl)methyl]-4-isocyanatobenzene, 2,4-diisocyanato-1-methyl-benzene, oligomers of the above-mentioned and mixtures thereof.

More preferably isocyanate compound A is an aromatic isocyanate compound and selected from the group consisting of methylene diphenyl diisocyanate, 1-[bis(4-isocyanatophenyl)methyl]-4-isocyanatobenzene, 2,4-diisocyanato-1-methyl-benzene, oligomers of the above-mentioned and mixtures thereof; and isocyanate compound B is an aliphatic isocyanate compound and selected from the group consisting of 1,3,5-tris(6-isocyanatohexyl)-1,3,5-triazinane-2,4,6-trione, 6-[3-(6-isocyanatohexyl)-2,4-dioxo-1,3-diazetidin-1-yl]hexyl N-(6-isocyanatohexyl) carbamate, 1,6-diisocyanatohexane, oligomers of the above-mentioned and mixtures thereof.

Commercially available isocyanates for use in the present invention include, but are not limited to, Desmodur RE, Desmodur N3300, Desmodur N3200, Desmodur IL, and Desmodur HL from Bayer; Diphenylmethane 4,4'-diisocyanate (MDI) from Merck; and Polurene KC, Polurene HR from Sapici.

An aerogel according to the present invention has an isocyanate compound A content from 0.1 to 65% based on the weight of the solvent A, preferably from 1 to 40% and more preferably from 2 to 30%.

An aerogel according to the present invention has an isocyanate compound B content from 1 to 60% based on the weight of the solvent B, preferably from 2 to 40%, and more preferably from 5 to 25%.

These ranges are preferred because desired materials can be obtained: low thermal conductivity and shrinkage. In addition, the morphology of the material is different from aerogels described in the prior art. If the aerogel would exceed the quantity of isocyanate compound A or B, the obtained materials would have higher density in combination with too high thermal conductivity.

A cyclic ether compound reacts with the isocyanate compound A to form a urethane, which is part of the copolymer hybrid network of the aerogel according to the present invention. The suitable cyclic ether compound for use in the present invention is an epoxy compound or an oxetane compound.

When the cyclic ether compound is an epoxy compound, it is preferably selected from the group consisting of 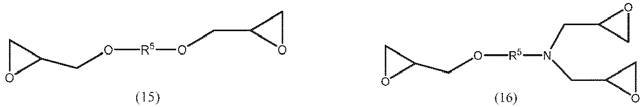 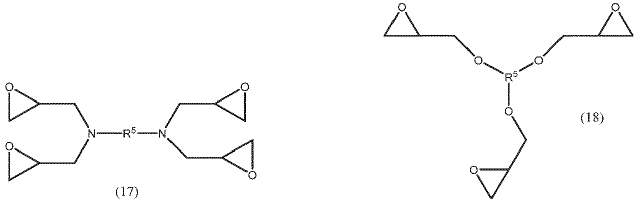 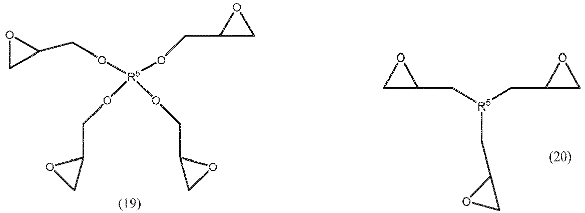 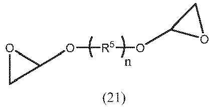 wherein R⁵ is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group; and n is an integer from 1 to 30; 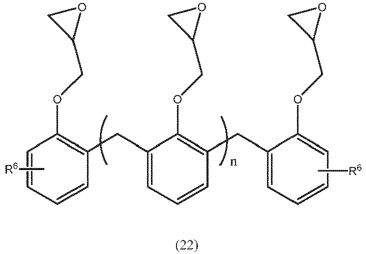 wherein R⁶ is selected independently from the group consisting of hydrogen, halogen, alkyl and alkenyl; and n is an integer from 1 to 10; 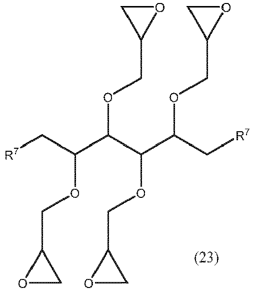 wherein R⁷ is selected independently from the group consisting of hydrogen, hydroxyl, halogen, alkyl and alkenyl; 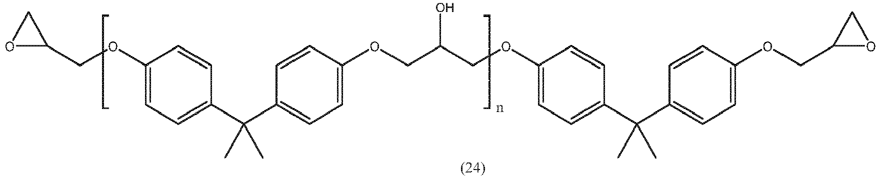 wherein n is an integer from 0 to 16.

More preferably said epoxy compound is selected from the group consisting of N,N-diglycidyl-4-glycidyloxyaniline, sorbitol glycidyl ether-aliphatic polyfunctional epoxy resin, 4,4'-methylenebis(*N*,*N*-diglycidylaniline), 2-[[4-[2-[4-(oxiran-2-ylmethoxy)phenyl]propan-2-yl]phenoxy]methyl]oxirane and poly[(o-cresyl glycidyl ether)-co-formaldehyde].

Suitable commercially available epoxy compounds for use in the present invention include, but are not limited to 1,4 butanediol diglycidyl ether (Erisys™ GE21), cyclohexandimethanol diglycidyl ether (Erisys™ GE22), ethylene glycol diglycidyl ether (Erisys™ EDGE), dipropylen glycol diglycidyl ether (Erisys™ GE23), 1,6 hexanediol diglycidyl ether (Erisys™ GE25), trimethylolpropane triglycidyl ether (Erisys™ GE30), polyglycerol-3-polyglycidyl ether (Erisys™ GE38), sorbitol glycidyl ether-aliphatic polyfunctional epoxy resin (Erisys™ GE60), phenol novolac epoxy resins (Epalloy™ 8220, 8230, 8240, 8250, 8280, 8330, 8350, 8370), from CVC Thermoset resins; tetraglycidyl ether of 1,1,2,2-tetrakis(hydroxyphenyl)ethane (Araldite® XB-4399-3), N,N,N',N'-Tetraglycidyl-4,4'-methylenebisbenzenamine (Araldite® MY720), tris-(hydroxyl phenyl) methane-based epoxy resin (Tactix® 742), triglicidyl ether of meta-aminophenol (Araldite® MY0610, MY0600), triglicidyl ether of para-aminophenol (Araldite® MY0510, MY0500), bisphenol-A based epoxy resins (Araldite® GY6004, GY6005, GY9513, GY9580, GY9613, GY9615, GT6243, GT4248, GT6097, GT7072, Tactix® 123) and phenol novolac epoxy resins (Araldite EPN 1179, 1180) from Huntsman; bisphenol-A based epoxy resins (D.E.R.™ 317, 330, 331, 332, 337, 362, 383) and polypropylene glycol epoxy (D.E.R.™ 732, 736), phenol novolac epoxy resins (D.E.N.™ 425, 431, 438, 439, 440) from Dow Chemical.

When the cyclic ether compound is an oxetane compound, it is preferably selected from the group consisting of 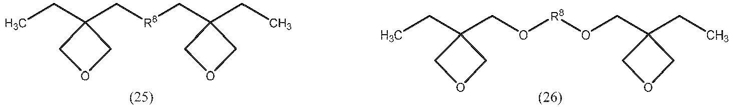 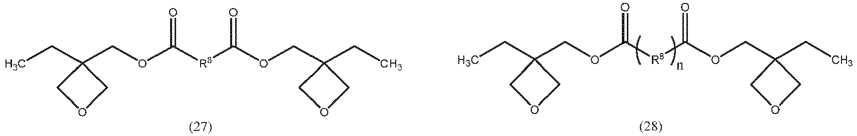 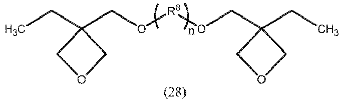 wherein R⁸ is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group; and n is an integer from 1 to 30.

More preferably, said oxetane compound is selected from the group consisting of 1,4-bis[(3-ethyl-3-oxetanylmethoxy)methyl]benzene and bis[1-ethyl(3-oxetanyl)]methyl ether.

Suitable commercially available oxetane compound for use in the present invention include, but are not limited to 1,4-bis[(3-ethyl-3-oxetanylmethoxy)methyl]benzene (Eternacoll OXBP), bis[(3-ethyl-3-oxetanyl)methyl]terephthalate (Eternacoll OXTP), bis[1-ethyl(3-oxetanyl)]methyl ether (Aron OXT 221), and 1,4-bis[(3-ethyl-3-oxetanylmethoxy) methyl]benzene (Aron OXT 121) from Toagosei America INC.

An aerogel according to the present invention has a cyclic ether content from 0.1 to 65% by weight of the weight of the initial solvent A, preferably from 1 to 40%, and more preferably from 2 to 30%.

An aerogel according to the present invention has an equivalent ratio of epoxy or oxetane groups to isocyanate groups of isocyanate compound A is 15:1 - 1:15, preferably 10:1 - 1:10, more preferably 5:1 - 1:5.

Preferred ratios are desired because obtained aerogels have a low thermal conductivity and less shrinkage. Aerogel obtained at higher ratios, such as 20:1 or 1:20 or 50:1 or 1:50, would contain more unreacted compounds.

An aerogel according to the present invention is obtained by reacting isocyanate compound B and silanol moieties on a surface of a clay to form a polyurethane component, which is part of the hybrid network of the aerogel according to the present invention. Although, it may also form polyurea and polyisocyanurate components, however, in a lesser extent.

Clays have a high impact in the final material properties, especially when they are in a delaminated state, as a very high aspect ratio is achieved. In addition, properly dispersed and aligned clay platelets have proven to be very effective in increasing stiffness. Therefore, clay based aerogels can combine both advantages from inorganic and organic materials. Low thermal conductivity and good mechanical properties are maintained, while dustiness is minimized.

Clays are a class of aluminosilicate minerals that are naturally hydrophilic. They contain several aluminosilicate platelets. Each platelet is formed by two silicate layers with an aluminium oxide layer sandwiched in between. Some aluminium atoms are replaced by magnesium, generating a global negative charge. Small ions such as Na⁺, K⁺, Ca²⁺, etc., stay in the gallery between the platelets, counter-balancing the charge. In organoclays, these cations consist on quaternary ammonium salts with hydrocarbon substituents. The aspect ratio of each platelet is very high. The lateral dimensions are in the micron size range, whereas the thickness is about one nanometre. The strong electrostatic interactions stack the platelets together forming aggregates and tactoids.

When clays are put in contact with solvents or polymers, two main situations can be obtained: 1) intercalation, wherein the solvent or the polymer is located in between two different platelets; 2) delamination, where platelets are exfoliated and dispersed in a continuous solvent or polymer matrix. In order to favour delamination in the presence of solvents or hydrophobic polymers, clays can be organically modified. In such organoclays, the intergallery cations are replaced by quaternary alkyl ammoniums, increasing their compatibility with the organic systems.

According to the present invention, to achieve the network formed by the reaction between the silanol groups located on the surface of the clay and isocyanate groups of the isocyanate compound B, the clays must be delaminated prior to the reaction.

Delamination allows the silanol groups confined in-between the agglomerated platelets to react with isocyanates. Therefore, dispersion and delamination is a key step during the aerogel preparation process in order to achieve the desired aerogel. Moreover, only when a high degree of delamination is achieved the enhancement in the properties of the final material due to the presence of clays, is observed.

The clays suitable for use in the present invention are mainly organically-modified, in order to enhance clays' compatibility with non-aqueous media. However, non-modified clays may also provide aerogels in some non-aqueous solvents.

In the aerogels according to the present invention, the clay itself is helping to promote the formation of a strong 3D network of the aerogel through the crosslinking bridges. In order to get the proper supramolecular interaction to direct the gel formation, a good compromise between the clay, the reactive isocyanate compounds A and B, the reactive cyclic ether, the solid content and the solvent needs to be carefully designed.

Suitable clays for use in the present invention are phyllosilicate mineral species. Preferably, clay is selected from the group consisting of 2:1 laminar silicates, and more preferably from the subgroup of montmorillonite or sepiolite and mixtures thereof.

In a highly preferred embodiment, the clay is quaternary ammonium alkyl and/or aryl modified clay.

Preferred clays have a good dispersion and good solvent compatibility, which leads to homogeneous materials.

Examples of commercially available clays for use in the present invention include, but are not limited to Tixogel VZ, Tixogel MPZ, Tixogel VP, Tixogel MP250, Cloisite 30B, Cloisite 10A, Cloisite 15, Cloisite 20, Cloisite 93, Cloisite 116, Optigel CL, Claytone AF, Claytone 40, Laponite EP, Laponite B, Laponite RD, Laponite RDS and Garamite 1958 from BYK; Nanocor I30P and Nanocor PGN from Nanocor; Pangel S9, Pangel W, Pangel 20B, Pangel 40B Pansil 400 from Tolsa.

An aerogel according to the present invention has a clay content from 0.5 to 30% by weight of the weight of the initial solvent B, preferably from 0.5 to 20% and more preferably from 0.5 to 10%.

If the clay content is less than 0.5% obtained gel with poor performance. On the other hand if the clay content is higher than 30% obtained gel would have higher density and too high thermal conductivity.

An aerogel according to the present invention is obtained in the presence of solvent A and solvent B. Solvent A and solvent B can be same or different solvents. Preferably, solvent A and solvent B are the same solvent.

Suitable solvents for use in the present invention are polar solvents, preferably aprotic polar solvents. Preferably solvent A and solvent B are a polar solvent, preferably a polar aprotic solvent. More preferably solvent A and solvent B are independently selected from the group consisting of dimethylacetamide (DMAc), dimethylformamide (DMF), 1-methyl-2-pyrrolidinone (NMP), dimethyl sulfoxide (DMSO), acetonitrile, acetone, methyl ethyl ketone (MEK), methyl isobutyl ketone (MIBK) and mixtures thereof.

An aerogel according to the present invention has a volumetric ratio of solution A to solution B from 10:1 to 1:10, preferably from 6:1 to 1:6, and more preferably from 3:1 to 1:3.

An aerogel according to the present invention may be obtained in the presence of a catalyst. The presence of the catalyst depends on the reaction conditions.

A catalyst is needed when the total solid content is below 20%, this is because the gelation time increases at lower solid contents. Although, in normal conditions a catalyst is used to speed up gelation time and control the reactivity.

Suitable catalyst for use in the present invention is selected from the group consisting of alkyl amines, aromatic amines, imidazole derivatives, aza compounds, guanidine derivatives and amidines, preferably said catalyst is selected from the group consisting of triethylamine, trimethylamine, benzyldimethylamine (DMBA), N,N-dimethyl-1-phenylmethanamine, 2-ethyl-4-methylimidazole, 2-phenylimidazole, 2-methylimidazole, 1-methylimidazole, 4,4'-methylene-bis(2-ethyl-5-methylimidazole), 3,4,6,7,8,9-hexahydro-2H-pyrimido[1,2-a]pyrimidine, 2,3,4,6,7,8,9,10-octahydropyrimido [1,2-a]azepine, 1,8-diazabicyclo[5.4.0]undec-7-ene (DBU), 1,5,7-triazabicyclo[4.4.0]dec-5-ene (TBD), 1,4-diazabicyclo[2.2.2]octane (DABCO), 1,5-diazabicyclo[4.3.0]non-5-ene, quinuclidine, dibutyltin dilaurate (DBTDL) and mixtures thereof.

When a catalyst is present, the catalyst content is from 0.01 to 30% by weight of the total weight of isocyanate compound A and a cyclic ether compound, preferably from 0.1 to 20%, more preferably from 1 to 15%, and more preferably from 1 to 10%.

In order to improve the mechanical properties of the aerogels, different materials can be used as structural reinforcing agents. In order to reinforce the aerogels, the reinforcing agent is introduced in the synthesis once all the reactants have been dissolved, but before the gelation starts. This allows for a homogeneous distribution of the reinforcing agent in the system.

Therefore, an aerogel according to the present invention may further comprise at least one reinforcement agent, wherein said reinforcement agent is selected from the group consisting of fibres, particles, non-woven and woven fibre fabrics, 3D structures and mixtures thereof.

More specifically suitable reinforcement agents may include honeycomb cores (based on aramid fibre or others), glass fibres, cellulose fibres, jute fibre fabrics, carbon black or others.

An aerogel according to the present invention has a solid content from 4 to 32%, based on total weight of the total initial solution, preferably from 5 to 20%, more preferably from 5 to 10%. In this context by total initial solution is meant the sum of solution A and solution B.

If the solid content is less than 4%, no gelation is observed and on the other hand if the solid content is above 32%, the thermal conductivity increases too much.

An aerogel according to the present invention has a thermal conductivity less than 75 mW/m·K, preferably less than 55 mW/m·K, more preferably less than 50 mW/m·K, and even more preferably less than 40 mW/m·K. Thermal conductivity is measured by means of diffusivity sensor method as described below.

### Diffusivity sensor method:

The thermal conductivity is measured by using a diffusivity sensor. The heat source and the measuring sensor are on the same side of the device. The sensors measure the heat that diffuses from the sensor throughout the materials. Diffusivity sensor method is appropriate for lab scale tests. The diffusivity sensor used was a C-Therm TCi (C-Therm Technologies).

The present invention allows to adjust thermal conductivity and compressive Young's modulus of the aerogel by varying the aerogel formulation variables. For instance, Table 1 illustrates the effect of varying the volumetric ratio.

**Table 1**

| ***Volumetric ratio*** | ***Thermal conductivity (mW*/*m·K)*** | ***Linear Shrilkage (%)*** | ***Density (g*/*cm³)*** | ***Compressive Yuong's Modulus (MPa)*** | ***Morphology simplify schema*** | ***Morphology SEM (100.000X)*** |
|---|---|---|---|---|---|---|
| ***Solution A*** | 40.0 | 6.9 | 0.102 | 0.06 | 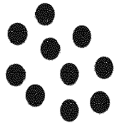 | 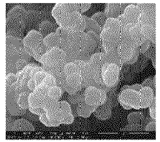 |
| ***3 to 1*** | 39.7 | 10.9 | 0.162 | 0.49 | 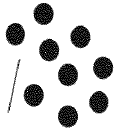 | 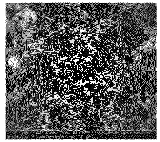 |
| ***2 to 1*** | 38.7 | 7.4 | 0.143 | 0.48 | 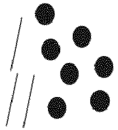 | 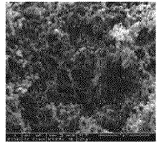 |
| ***1 to 1*** | 38.4 | 7.2 | 0.116 | 0.56 | 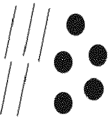 | 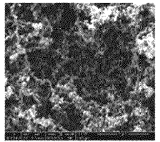 |
| ***1 to 2*** | 38.7 | 7.7 | 0.121 | 0.89 | 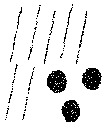 | 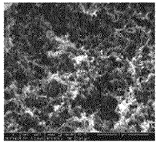 |
| ***1 to 2*** | 39.7 | 9.4 | 0.124 | 1.23 | 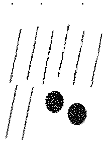 | 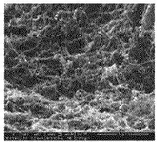 |
| ***solution B*** | 41.7 | 21.2 | 0.192 | 7.24 | 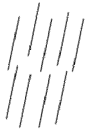 | 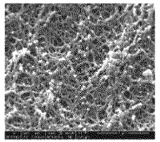 |

Table 1 above illustrates a comparison of copolymer hybrid aerogels obtained by mixing two different solutions, solution A and solution B at different volumetric ratios. The solution A is composed of an epoxy (Araldite MY0510) and an aromatic isocyanate (Desmodur RE) in acetone. The solution B is composed of an organically-modified clay (Tixogel VZ), and a trifunctional aliphatic isocyanate (Desmodur N3300) in acetone. The solid content of the total solution (solution A + solution B) is 12wt%.

Aerogels thermal conductivity decreases from 40.0 mW/mK for the aerogel obtained with 100% of solution A, to 38.4 mW/m·K, when 1/1 of volumetric ratio of solution A and solution B is used. The thermal conductivity of the aerogel increases up to 41.7 mW/mK, when 100% of solution B is used.

Aerogel shrinkage of copolymer hybrid aerogels decreased from 10.9% (3/1 volumetric ratio) to 7.2% when volumetric ratio of 1/1 is used. By increasing volume of solution B an increase in the linear shrinkage up to 21% is observed.

The aerogel morphology changes from a completely particle based morphology obtained when 100% solution A is used, to a mixed fibrillar and particle-like morphology, when a higher volumetric ratio of solution B is used.

An aerogel according to the present invention has a compressive Young's modulus more than 0.1 MPa, preferably more than 15 MPa, and more preferably more than 30 MPa. Compression Young Modulus is measured according to the method ASTM D1621.

An aerogel according to the present invention has a bulk densities ranging from 0.01 to 0.8 g/cc. The bulk density is measured as the ratio of the mass weighted divided by the aerogel volume measured.

An aerogel according to the present invention has preferably a specific surface area ranging from 10 m²/g to 300 m²/g. Surface area is determined from N₂ sorption analysis at -196°C using the Brunauer-Emmett-Teller (BET) method, in a specific surface analyser Micromeretics ASAP 2000. High surface area values are preferred because they are indicative of small pore sizes, which may be an indication of low thermal conductivity values.

An aerogel according to the present invention has preferably an average pore size ranging from 5 to 50 nm. Pore size distribution is calculated from Barret-Joyner-Halenda (BJH) model applied to the desorption branch from the isotherms measured by N₂ sorption analysis. Average pore size was determined by applying the following equation: Average pore size = (4*V/ SA) wherein V is total pore volume and SA is surface area calculated from BJH. Porosity of the samples can also be evaluated by He picnometry.

Aerogel pore size below the mean free path of an air molecule (which is 70 nm) is desired, because that allows obtaining high performance thermal insulation aerogels having very low thermal conductivity values.

An aerogel according to the present invention has an adjustable morphology comprising interconnected particles of nanometric size and fibrils of nanometric width, or both particles and fibrils are obtained. Table 1 illustrates how the morphology of the aerogel can be adjusted by changing volumetric ratios of components.

The preparation of aerogels is widely known and can be split in three main steps. Firstly, a sol-gel process, where the reactive monomers react to form oligomers and the supramolecular interactions between these oligomers with time generates the gel. The subsequent step involves a solvent exchange, where the initial solvent is replaced by fresh solvent one or more times in order to remove the impurities. And finally, a drying step, in which the removal of the solvent is carried out by minimizing stresses in the solid backbone to yield a material that has high porosity and low density. The drying step might be done via different techniques, which are usually classified as subcritical or supercritical. Figure 1 illustrates the steps in the general formation of an aerogel.

The main method for subcritical drying is room temperature drying, where the appropriate solvent is allowed to dry under ambient conditions. Although this procedure is relatively inexpensive, it entails some problems. When the original solvent in the gel is evaporated, capillary stress in the pores of the gel induces the struts of the pore network to collapse and the material shrinks. The density of the aerogel is increased and consequently a less insulating material is obtained. The most effective method, supercritical drying, overcomes these problems. The process takes advantage of removing the initial solvent by using a supercritical fluid. By these means, the capillary forces exerted by the solvent due to evaporation are minimized, and structures with large internal void spaces are achieved. The materials presented here can be dried by both procedures, ambient and supercritical drying, allowing the drying technique to be selected according to the application requirements.

Many of the properties of an aerogel according to the present invention can be adjusted by tailoring the production process. Bulk density is one good example of this, it can be adjusted simply by making a more or less concentrated precursor gel. The thermal conductivity of an aerogel can be also adjusted this way, since the thermal conductivity is related to density.

A method for preparing an aerogel according to the present invention comprises the steps of:
1) adding a clay into the mixture of solvent A and solvent B and mixing at high shear rates;
2) dissolving a cyclic ether compound into the mixture prepared in step 1;
3) adding an isocyanate compound B and mixing;
4) adding an isocyanate compound A and mixing;
5) adding a catalyst if present and mixing;
6) letting the mixture to stand in order to form a gel;
7) exchanging the solvent of said gel with a solvent; and
8) drying said gel via supercritical or ambient drying.

Steps three and four, involving addition of isocyanate compounds A and B, can be done in any order, however, it is preferred that less reactive isocyanate compound is added first, meaning that the aliphatic isocyanate compound is added first and the aromatic isocyanate compound is added second.

The gelation step, step six, is carried out for the pre-set time and temperature. Gelation in the step six is preferably conducted at room temperature, although gelation in the method according to the present invention is done in the temperature from 20°C to 160°C, more preferably from 35°C to 155°C. Gelation in the step six is achieved in most of the cases in less than 24 hours. Typically gelation time in the method according to the present invention is between 10 minutes and 48 hours, preferably between 10 minutes and 24 hours, more preferably between 10 minutes and 5 hours.

The solvent of wet gels is changed one or more times after the gelation in step seven. The solvent is exchanged gradually, and if required, to the preferred solvent for the drying process.

In one embodiment, the solvent is exchanged gradually as follows: 1) N,N-dimethylacetamide; 2) N,N-dimethylacetamide:acetone 3:1; 3) N,N-dimethylacetamide:acetone 1:1; 4) N,N-dimethylacetamide:acetone 1:3 5) acetone.

Solvent exchange time is from 12 hours to 96 hours in step seven, preferably from 24 hours to 72 hours.

Once the wet gel remains in the proper solvent in the step seven, it is dried in supercritical (CO₂) or ambient conditions in step eight obtaining an aerogel material. For example, if the obtained gels are dried in CO₂ the replacing solvent is acetone, whereas if the obtained gels are dried at ambient conditions the replacing solvent is hexane.

The drying process at supercritical conditions is performed by exchanging the solvent in the gel with CO₂ or other suitable solvents in their supercritical state. Due to this, capillary forces exerted by the solvent during evaporation in the nanometric pores are minimized and shrinkage of the gel can be reduced.

The supercritical state of a substance is reached once its liquid and gaseous phases become indistinguishable. The pressure and temperature at which the substance enters this phase is called critical point. In this phase, the fluid shows the low viscosity of a gas, and the high density of a liquid. It can effuse through solids like a gas and dissolve materials like a liquid. Considering an aerogel, once the liquid inside the wet gel pores reaches the supercritical phase, its molecules do not possess enough intermolecular forces to create the necessary surface tension that creates capillarity stress. Hence, the gel can be dried, minimizing shrinkage and possible collapse of the gel network.

Alternatively, wet gels can be dried at ambient conditions, in which the solvent is evaporated at room temperature. However, as the liquid evaporates from the pores, it can create a meniscus that recedes back into the gel due to the difference between interfacial energies. This may create a capillary stress on the gel, which responds by shrinking. If these forces are strong enough, they can even lead to the collapse or cracking of the whole structure. However, there are different possibilities to minimize this phenomenon. One practical solution involves the use of solvents with low surface tension to minimize the interfacial energy between the liquid and the pore. Hexane is usually used as a convenient solvent for ambient drying, as its surface tension is one of the lowest among the conventional solvents. Unfortunately, not all the solvents lead to gelation, which means that some cases would require the exchange of solvent from an initial one, required for the gel formation to a second one, mostly appropriate for the drying process.

It was found that very limited shrinkage of the final aerogel structure (compared to the initial volume of the wet gel) occurred in aerogels prepared by using the method according to the present invention. The shrinkage was approximately 5-10% for the samples dried by supercritical drying and 15-20% for the samples dried at ambient conditions.

Aerogels according to the present invention can be used as a thermal and/or acoustic insulating material.

The present invention also relates to a thermal and/or an acoustic insulating material comprising aerogels according to the present invention.

### EXAMPLES

### Example 1: Copolymer hybrid aerogel reinforced with chopped glass fibres without catalyst

The calculation of the components content for the synthesis of the aerogels was based on the mixture of two different solutions, solution A and solution B. The volumetric ratio between solution A and B was 1:1. The solution A was composed of an epoxy (Araldite MY0510), solvent (acetone) and trifunctional aromatic isocyanate (Desmodur RE). This solution was prepared with an equivalent ratio epoxy/isocyanate of 1:1. The solution B was composed of an organically-modified clay (Tixogel VZ), solvent (acetone) and trifunctional aliphatic isocyanate (Desmodur N3300). The weight ratio isocyanate/clay was 10/3. The solid content of the total solution (solution A + solution B) was 27wt%.

For the preparation of a sample of 20 mL, 7.48 g of solvent (0.09 g of acetone in solution A and 7.39 g of acetone in solution B) was poured in a polypropylene speed mixer cup (50 mL) was followed by the addition of Tixogel VZ (0.19 g) and 20 phr of grinding ceramic beads (Zirmyl Y) to increase the shearing while mixing. The system was mixed in a speed mixer for three minutes at 3500 rpm. The ceramic beads were removed from the obtained dispersion and Araldite MY0510 (1.87 g) was added and manually stirred. Subsequently, Desmodur N3300 (0.63 g) was incorporated and manually stirred. Finally, Desmodur RE (8.35 g, containing 2.25 g of pure isocyanate) was added and manually stirred.

1wt% (based on the weight of the total initial solution, A and B) of chopped glass fibres with a length ranged from 0.5 to 2 cm was incorporated in the mixture and carefully distributed with a wooden spatula. The final mixture was left to gel in the same recipient in an oven at 45 °C overnight. The obtained gel was washed with acetone in several steps and subsequently dried via CO₂ supercritical drying (SCD). Table 2 summarizes the properties obtained for the aerogel.

**Table 2**

| ***Solvent*** | ***Density (g*/*cm³)*** | ***Linear shrinkage (%)*** | ***Thermal conductivity (mW*/*m·K)*** | ***Compression Modulus*** *(MPa)*** |
|---|---|---|---|---|
| Acetone | 0.255 | 8.7 | 42.0 | 5.1 |

| | | | | |
|---|---|---|---|---|
| *Thermal conductivity measured with the C-Therm TCi according to the method described above. **Mechanical properties determined in accordance with ASTM D1621 | | | | |

### Example 2: Copolymer hybrid aerogel prepared at high temperature (155°C)

The calculation of the components content for the synthesis of the aerogels was based on the two different solutions, solution A and solution B. The volumetric ratio between solution A and B was 1:1. The solution A was composed of an epoxy (Araldite MY0510), solvent (N,N-dimethylacetamide, DMAc), aromatic isocyanate (diphenylmethane 4,4'-diisocyanate, MDI) and catalyst (N,N-dimethylbenzylamine, DMBA). This solution was prepared with an equivalent ratio epoxy/isocyanate of 3:1. The solution B was composed of an organically-modified clay (Tixogel VZ), solvent (DMAc) and trifunctional aliphatic isocyanate (Desmodur N3300). The weight ratio isocyanate/clay was 10/3. The solid content of the total solution (solution A + solution B) was 19wt%.

For the preparation of a sample of 30 mL, 21.83 g of solvent (10.44 g of DMAc in solution A and 11.39 g of DMAc in solution B) was poured in a polypropylene container (120 mL) followed by the addition of Tixogel VZ (0.33 g) and 20 phr of grinding ceramic beards (Zyril Y) to increase the shearing while mixing. The system was mixed in a speed mixer for three minutes at 3500 rpm. The ceramic beads were removed from the dispersion and Araldite MY0510 (2.64 g) was added and manually stirred. Subsequently, Desmodur N3300 (1.10 g) was incorporated and manually stirred. MDI (1.09 g) was added to the dispersion and manually stirred. Finally, DMBA (0.75 g) was incorporated in the system and manually stirred.

The final mixture was left to gel in the same recipient in an oven at 155°C for 1.5 hours. The solvent (DMAc) was changed to acetone in several steps: DMAc, DMAc/acetone 3:1, 1:1, 1:3 and acetone. The samples were dried via CO₂ supercritical drying (SCD). Table 3 summarizes the properties obtained for the aerogel.

**Table 3**

| ***Solvent*** | ***Density (g*/*cm3)*** | ***Linear shrinkage (%)*** | ***Thermal conductivity (mW*/*m·K)*** | ***Compression Modulus** (MPa)*** |
|---|---|---|---|---|
| N,N-Dimethylacetamide | 0.300 | 24.7 | 44.6 | 7.7 |

| | | | | |
|---|---|---|---|---|
| *Thermal conductivity measured with the C-Therm TCi according to the method described above. **Mechanical properties determined in accordance with ASTM D1621 | | | | |

### Example 3: Copolymer hybrid aerogel reinforced with carbon black

The calculation of the components content for the synthesis of the aerogels was based on the mixture of two different solutions solution A and solution B. The volumetric ratio between solution A and B was 1:1. The solution A was composed of an epoxy (Araldite MY0510), solvent (acetone), trifunctional aromatic isocyanate (Desmodur RE) and catalyst (1,4-diazabicyclo[2.2.2]octane, DABCO). This solution was prepared with an equivalent ratio epoxy/isocyanate of 1:1. The solution B was composed of an organically-modified clay (Tixogel VZ), solvent (acetone) and trifunctional aliphatic isocyanate (Desmodur N3300). The weight ratio isocyanate/clay was 10/3. The solid content of the total solution (solution A + solution B) was 7.5wt%.

For the preparation of a sample of 20 mL, 14.5 g of solvent (7.1 g of acetone in solution A and 7.4 g of solvent in solution B) was poured in a polypropylene speed mixer cup (50 mL) followed by the addition of Tixogel VZ (0.19 g) and 20 phr of grinding ceramic beads (Zirmyl Y) to increase the shearing while mixing. The mixture was mixed in a speed mixer for three minutes at 3500 rpm. The ceramic beads were removed from the dispersion and Araldite MY0510 (0.184 g) was added and manually stirred. Desmodur N3300 (0.637 g) was incorporated and manually stirred. Desmodur RE (0.82 g, containing 0.22 g of pure isocyanate) was added to the dispersion and manually stirred. Finally, DABCO (0.04 g) was incorporated and manually stirred.

0.1wt% (based on the weight of the total initial solution, A and B) of carbon black was incorporated in the system and mixed in the speed mixer for three minutes at 3500 rpm. The final mixture was left to gel in the same recipient in an oven at 45°C for two hours. The gel was washed with acetone in several steps and subsequently dried via CO₂ supercritical drying (SCD). Table 4 summarizes the properties obtained for the aerogel.

**Table 4**

| ***Solvent*** | ***Density (g*/*cm³)*** | ***Linear shrinkage (%)*** | ***Thermal conductivity (mW*/*m·K)*** | ***Compression Modulus*** *(MPa)*** |
|---|---|---|---|---|
| Acetone | 0.134 | 23.0 | 37.0 | 1.23 |

| | | | | |
|---|---|---|---|---|
| *Thermal conductivity measured with the C-Therm TCi according to the method described above. **Mechanical properties determined in accordance with ASTM D1621 | | | | |

### Example 4: Copolymer hybrid aerogel reinforced with glass fibre fabrics

The calculation of the components content for the synthesis of the aerogels was based on the mixture of two different solutions, solution A and solution B. The volumetric ratio between solution A and B was 1:1. The solution A was composed of an epoxy (Araldite MY0510), solvent (acetone), trifunctional aromatic isocyanate (Desmodur RE) and catalyst (1,4-diazabicyclo[2.2.2]octane, DABCO). This solution was prepared with an equivalent ratio epoxy/isocyanate of 1:1. The solution B was composed of an organically-modified clay (Tixogel VZ), solvent (acetone) and trifunctional aliphatic isocyanate (Desmodur N3300). The weight ratio isocyanate/clay was 10/3. The solid content of the total solution (solution A + solution B) was 7.5wt%.

For the preparation of a sample of 20 mL, 14.5 g of solvent (7.1 g of acetone in solution A and 7.4 g of acetone in solution B) was poured in a polypropylene speed mixer cup (50 mL) followed by the addition of Tixogel VZ (0.19 g) and 20 phr of grinding ceramic beads (Zirmyl Y) to increase the shearing while mixing. The system was mixed in a speed mixer during three minutes at 3500 rpm. The ceramic beads was removed from the dispersion and Araldite MY0510 (0.184 g) was added and manually stirred. Desmodur N3300 (0.637 g) was incorporated and manually stirred. Desmodur RE (0.82 g, containing 0.22 g of pure isocyanate) was added to the dispersion and manually stirred. Finally, DABCO (0.04 g) was incorporated and manually stirred.

25wt% (based on the weight of the total initial solution, A and B) of glass fibre fabrics (10 layers of fabric) was placed in the system. The final mixture was left to gel in the same recipient in an oven at 45°C for two hours. The gel was washed with acetone in several steps and subsequently dried via CO₂ supercritical drying (SCD). Table 5 summarizes the properties obtained for the aerogel.

**Table 5**

| ***Solvent*** | ***Density (g*/*cm3)*** | ***Linear shrinkage (%)*** | ***Thermal conductivity (mW*/*m·K)*** | ***Compression Modulus** (MPa)*** |
|---|---|---|---|---|
| Acetone | 0.421 | 2.6 | 35.9 | 0.45 |

| | | | | |
|---|---|---|---|---|
| *Thermal conductivity measured with the C-Therm TCi according to the method described above. **Mechanical properties determined in accordance with ASTM D1621 | | | | |

### Example 5: Copolymer hybrid aerogel using difunctional and trifunctional isocyanates.

The calculation of the components content for the synthesis of the copolymer hybrid aerogels was based on the mixture of two different solutions of 10 ml each. The solution A was composed of an epoxy (Araldite MY0510), solvent (acetone), trifunctional aromatic isocyanate (Desmodur RE) and catalyst (1,4-diazabicyclo[2.2.2]octane, DABCO). This solution A was prepared with an equivalent ratio epoxy/isocyanate of 1:1. The solution B was composed of an organically modified clay (Tixogel VZ), solvent (acetone) and a mixture of difuctional and trifucntional aliphatic isocyanate (Desmodur N3200). The weight ratio isocyanate/clay was 10/3. The solid content of the total solution (solution A + solution B) was 26wt%.

For the preparation of a sample of 20 mL, 7.47 g of acetone (0.08 g of acetone in solution A and 7.39 g of acetone in solution B) was poured in a polypropylene speed mixer cup (50 mL) followed by the addition of 0.19 g Tixogel VZ and 20 phr of the grinding ceramic beads (Zirmyl Y) to increase the shearing while mixing. The mixture was stirred for three minutes at 3500 rpm. The ceramic beads were removed from the dispersion and 1.73 g of Araldite MY0510 is added and manually stirred. Then, 0.63g of Desmodur N3200 was incorporated and manually stirred. Finally, 7.73g of Desmodur RE (containing 2.09 g of pure isocyanate in ethyl acetate) was added to the dispersion, then 0.76 g of DABCO catalyst was incorporated and the solution was manually stirred.

The final mixture was left to gel in the same recipient at room temperature. The gel was formed in 5 minutes. Then gels were washed with solvents in several steps and subsequently dried via CO₂ supercritical drying (SCD). Table 6 illustrates measured properties of the obtained aerogel.

**Table 6**

| ***Solvent*** | ***Density (g*/*cm3)*** | ***Linear shrinkage (%)*** | ***Thermal conductivity (mW*/*m·K)*** | ***Compression Modulus*** *(MPa)*** |
|---|---|---|---|---|
| Acetone | 0.29 | 5.0 | 44.0 | 9.4 |

| | | | | |
|---|---|---|---|---|
| *Thermal conductivity measured with the C-Therm TCi according to the method described above. **Mechanical properties determined in accordance with ASTM D1621 | | | | |

### Example 6: Copolymer hybrid aerogel using a tetrafunctional epoxy and tetrafunctional isocyanate.

The calculation components content for the synthesis of the copolymer hybrid aerogels was based on the mixture of two different solutions, solution A and solution B. The volumetric ratio between solution A and solution B was 1:1. The solution A was composed of an epoxy (Erisys GE60), solvent (DMAc), isocyanate (Polurene HR), and TBD as a catalyst. Equivalent ratio epoxy/isocyanate was 1:1. The solution B was composed of an organically modified clay (Tixogel VZ), solvent (DMAc) and trifunctional aliphatic isocyanate (Desmodur N3300). The weight ratio isocyanate/clay was 10/3. The solid content of the total solution (solution A+ solution B) was 15 wt%.

For the preparation of a sample of 20 mL, 15.36 g of DMAc (6.72 g of DMAc in solution A and 8.64 g of DMAc in solution B) was poured in a polypropylene speed mixer cup (50 mL) followed by the addition of 0.22 g of Tixogel VZ and 20 phr of the grinding ceramic beads (Zirmyl Y) to increase the shearing while mixing. The mixture was stirred for three minutes at 3500 rpm. The ceramic beads were removed from the dispersion and 0.8 g of Erisys GE60 was added and manually stirred. Then, Polurene HR (2.36 g, containing 1.18 g of pure HR in butyl acetate) was incorporated and manually stirred. Then, 0.74 g of Desmodur N3300 was incorporated and manually stirred. Finally, 0.019 g of the catalyst was added to the dispersion and manually stirred.

The final mixture was left to gel in the same recipient at room temperature for 5 hours. The resulting gel was washed stepwise in a mixture of Acetone 1:3 DMAc, Acetone 1:1 DMAc, Acetone 3:1 DMAc and Acetone, duration of each step was 24h, and using solvent three times the volume of the gel for each step. Subsequently the gel was dried via CO₂ supercritical drying (SCD).Table 7 illustrates measured properties of the obtained aerogel.

**Table 7**

| ***Solvent*** | ***Density (g*/*cm3)*** | ***Linear shrinkage (%)*** | ***Thermal conductivity** *(mW*/*m·K)*** | ***Compression Modulus** (MPa)*** |
|---|---|---|---|---|
| N,N-Dimethylacetamide | 0.585 | 39.0 | 57.0 | 30 |

| | | | | |
|---|---|---|---|---|
| *Thermal conductivity measured with the C-Therm TCi according to the method described above. **Mechanical properties determined in accordance with ASTM D1621 | | | | |

### Example 7: Copolymer hybrid aerogel using epoxy/isocyanate equivalent ratio of 5:1

The calculation of the components content for the synthesis of the copolymer hybrid aerogels was based on the mixture of two different solutions of solutions, solution A and solution B. The volumetric ratio between solution A and solution B was 1:1. The solution A was composed of an epoxy (Araldite MY0510), solvent (acetone), isocyanate (Desmodur RE), and DMBA as a catalyst. The equivalent ratio epoxy/isocyanate was 5:1. The solution B was composed of an organically-modified clay (Tixogel VZ), solvent (Acetone) and trifunctional aliphatic isocyanate (Desmodur N3300). The weight ratio isocyanate/clay was 10/3. The solid content of the total solution (solution A + solution B) was 10wt%.

For the preparation of a sample of 20 mL, 14.27 g of acetone (6.88 g of acetone in solution A and 7.39 g of acetone in solution B) was poured in a polypropylene speed mixer cup (50 mL) followed by the addition of 0.189 g of Tixogel VZ and 20 phr of the grinding ceramic beads (Zirmyl Y) to increase the shearing while mixing. The mixture is stirred for three minutes at 3500 rpm. The ceramic beads were removed from the dispersion and 0.65 g of Araldite MY0510 was added and manually stirred. Then, Desmodur RE (0.58 g, containing 0.16 g of pure RE in ethyl acetate) was incorporated and manually stirred. Then, 0.63 g of Desmodur N3300 was incorporated and manually stirred. Finally, 0.161 g of the catalyst was added to the dispersion and also manually stirred.

The final mixture was left to gel in the same recipient for 24h at 40 °C. The gels were washed with Acetone in several steps and subsequently dried via CO₂ supercritical drying (SCD). Table 8 illustrates measured properties of the obtained aerogel.

**Table 8**

| ***Solvent*** | ***Density (g*/*cm3)*** | ***Linear shrinkage (%)*** | ***Thermal conductivity** *(mW*/*m·K)*** | ***Compression Modulus*** *(MPa)*** |
|---|---|---|---|---|
| Acetone | 0.134 | 21.0 | 37.0 | 1.4 |

| | | | | |
|---|---|---|---|---|
| *Thermal conductivity measured with the C-Therm TCi according to the method described above. **Mechanical properties determined in accordance with ASTM D1621 | | | | |

### Example 8: Copolymer hybrid aerogel using oxetane

The calculation of the components content for the synthesis of the copolymer hybrid aerogels was based on the mixture of two different solutions, solution A and solution B. The volumetric ratio between solution A and solution B was 1:1. The solution A was composed of an oxetane (OXT-221), solvent (DMAc), isocyanate (Polurene KC), and TBD as a catalyst. The equivalent ratio oxetane/isocyanate was 1:1. The solution B was composed of an organically-modified clay (Tixogel VZ), solvent (acetone) and isocyanate (Desmodur N3300). The weight ratio isocyanate/clay was 10/3. The solid content of the total solution (solution A + solution B) was 15wt%.

For the preparation of a sample of 20 mL, 13.74 g (6.35 g of DMAc in solution A and 7.39 g of acetone in solution B) was poured in a polypropylene speed mixer cup (50 mL) followed by the addition of 0.189 g of Tixogel VZ and 20 phr of the grinding ceramic beads (Zirmyl Y) to increase the shearing while mixing. The mixture was stirred for three minutes at 3500 rpm. The ceramic beads were removed from the dispersion and 0.56 g of OXT-221 was added and manually stirred. Then, Polurene KC (2.74 g, containing 1.37 g of pure KC in butyl acetate) is incorporated and manually stirred. Then, 0.63 g of Desmodur N3300 was incorporated and manually stirred. Finally, 0.019 g of the catalyst was added to the dispersion and manually stirred.

The final mixture was left to gel in the same recipient for 3h at room temperature. The gels were washed with acetone 1:1 DMAc, acetone 3:1 DMAc and acetone, duration of each step was 24h, and using solvent three times the volume of the gel for each step. Subsequently the gel was dried via CO₂ supercritical drying (SCD). Table 9 illustrates measured properties of the obtained aerogel.

**Table 9**

| ***Solvent*** | ***Density (g*/*cm3)*** | ***Linear shrinkage (%)*** | ***Thermal conductivity** *(mW*/*m·K)*** | ***Compression Modulus*** *(MPa)*** |
|---|---|---|---|---|
| N,N-Dimethylacetamide/Acetone | 0.226 | 29 | 43.0 | 37 |

| | | | | |
|---|---|---|---|---|
| *Thermal conductivity measured with the C-Therm TCi according to the method described above. **Mechanical properties determined in accordance with ASTM D1621 | | | | |

### Example 9: Copolymer hybrid aerogel using volumetric ratio of 1 to 6

The calculation of the components content for the synthesis of the copolymer hybrid aerogels was based on the mixture of two different solutions A and B. The volumetric ratio between solution A and solution B was 1:6, solution A of 2.86 ml and solution B of 17.14 ml. The solution A was composed of an epoxy (Araldite MY0510), solvent (acetone), aromatic isocyanate (Desmodur RE), and 1,4-diazabicyclo[2.2.2]octane (DABCO) as a catalyst. This solution was prepared with an equivalent ratio epoxy/isocyanate of 1:1. The solution B was composed of an organically-modified clay (Tixogel VZ), solvent (acetone) and trifunctional aliphatic isocyanate (Desmodur N3300). The weight ratio isocyanate/clay in solution B was 10/3. The solid content of the total solution (solution A + solution B) was 10wt%.

For the preparation of a sample of 20 mL, 14.4 g of acetone (1.77 g of acetone in solution A and 12.67 g of acetone in solution B) was poured in a polypropylene speed mixer cup (50 mL) followed by the addition of 0.32 g of Tixogel VZ and 20 phr of the grinding ceramic beads (Zirmyl Y) to increase the shearing while mixing. The mixture was stirred for three minutes at 3500 rpm. The ceramic beads were removed from the dispersion and 0.11 g of Araldite MY0510 was added and manually stirred. Then, Desmodur RE (0.48 g, containing 0.13 g of pure RE in ethyl acetate) was incorporated and manually stirred. Then, 1.08 g of Desmodur N3300 was incorporated and manually stirred. Finally, 0.025 g of the catalyst was added to the dispersion and manually stirred.

The final mixture was left to gel in the same recipient for 24h at 40 °C. The gels were washed with acetone in several steps and subsequently dried via CO₂ supercritical drying (SCD). Table 10 illustrates measured properties of the obtained aerogel.

**Table 10**

| ***Solvent*** | ***Density (g*/*cm3)*** | ***Linear shrinkage (%)*** | ***Thermal conductivity** *(mW*/*m·K)*** | ***Compression Modulus*** *(MPa)*** |
|---|---|---|---|---|
| Acetone | 0.093 | 7.5 | 35.0 | 0.7 |

| | | | | |
|---|---|---|---|---|
| *Thermal conductivity measured with the C-Therm TCi according to the method described above. **Mechanical properties determined in accordance with ASTM D1621 | | | | |

### Example 10: Copolymer hybrid aerogel using a volumetric ratio of 2 to 1 and tetrafunctional epoxy

The calculation of the components content for the synthesis of the copolymer hybrid aerogels was based on the mixture of two different solutions, A and B. The volumetric ratio between solution A and solution B was 2:1, solution A of 13.3 ml and solution B of 6.7 ml. The solution A was composed of an epoxy (4,4,methylenebis N;N diglycidylaniline), solvent (acetone), aromatic isocyanate (Desmodur RE), and DMBA as a catalyst. This solution was prepared with an equivalent ratio epoxy/isocyanate of 1:1. The solution B was composed of an organically-modified clay (Tixogel VZ), solvent (acetone) and trifunctional aliphatic isocyanate (Desmodur N3300). The weight ratio of isocyanate/clay in solution B was 10/3. The solid content of the total solution (solution A + solution B) was 7.3wt%.

For the preparation of a sample of 20 mL, 14.4g of acetone (9.45 g of acetone in solution A and 4.94 g of acetone in solution B) was poured in a polypropylene speed mixer cup (50 mL) followed by the addition of 0.15 g of Tixogel VZ and 20 phr of the grinding ceramic beads (Zirmyl Y) to increase the shearing while mixing. The mixture was stirred for three minutes at 3500 rpm. The ceramic beads were removed from the dispersion and 0.27 g of 4,4'-Methylenebis(N,N-diglycidylaniline) was added and manually stirred. Then, Desmodur RE (1.03 g, containing 0.28 g of pure RE in ethyl acetate) was incorporated and manually stirred. Then, 0.492g of Desmodur N3300 was incorporated and manually stirred. Finally, 0.11 g of the catalyst was added to the dispersion and manually stirred.

The final mixture was left to gel in the same recipient at 45°C for 5 hours. The gels were washed with acetone in several steps and subsequently dried via CO₂ supercritical drying (SCD). Table 11 illustrates measured properties of the obtained aerogel.

**Table 11**

| ***Solvent*** | ***Density (d*/*cm3)*** | ***Linear shrinkage (%)*** | ***Thermal conductivity** *(mW*/*m·K)*** | ***Compression Modulus***** *(**MPa)*** |
|---|---|---|---|---|
| Acetone | 0.0507 | 5.2 | 32.8 | 0.2 |

| | | | | |
|---|---|---|---|---|
| *Thermal conductivity measured with the C-Therm TCi according to the method described above. **Mechanical properties determined in accordance with ASTM D1621 | | | | |

### Example 11: Copolymer hybrid aerogel reinforced with honeycomb

The calculation of the components content for the synthesis of the aerogels is based on the mixture of two different solutions, A and B. The volumetric ratio between solution A and solution B was 1:2, solution A of 6.7 ml and solution B of 13.3 ml. The solution A was composed of an epoxy (Araldite MY0510), solvent (acetone), trifunctional aromatic isocyanate (Desmodur RE) and catalyst (DMBA). This solution was prepared with an equivalent ratio epoxy/isocyanate of 1:1. The solution B was composed of an organically-modified clay (Garamite 1958), solvent (acetone) and trifunctional aliphatic isocyanate (Desmodur N3300). The weight ratio isocyanate/clay for this solution was 10/3. The solid content of the total solution (solution A + solution B) was 11wt%. The honeycomb incorporated was based on aramid fibers and phenolic resin with a density of 48 kg%m³ and a cell size of 4.8 mm.

For the preparation of a sample of 20 mL, 13.93 g of acetone (4.06 g of acetone in solution A and 9.87 g of acetone in solution B) was poured in a polypropylene speed mixer cup (50 mL) followed by the addition of 0.29 g of Garamite 1958 and 20 phr of the grinding ceramic beads (Zirmyl Y) to increase the shearing while mixing. The mixture was stirred for three minutes at 3500 rpm. The ceramic beads were removed from the dispersion and 0.24 g of Araldite MY0510 was added and manually stirred. Then, Desmodur RE (1.09 g, containing 0.29 g of pure RE in ethyl acetate) was incorporated and manually stirred. Then, 0.98 g of Desmodur N3300 was incorporated and manually stirred. Finally, 0.22 g of the DMBA catalyst was added to the dispersion and also manually stirred. Once the reactants were dispersed, the reinforcement, a honeycomb core based on aramid fibre and phenolic resin was incorporated.

The final mixture was left to gel in the same recipient in an oven at 45°C for two hours. The gel was washed with acetone in several steps and subsequently dried via CO₂ supercritical drying (SCD). Table 12 illustrates measured properties of the obtained aerogel.

**Table 12**

| ***Solvent*** | ***Density (g*/*cm³)*** | ***Linear shrinkage (%)*** | ***Thermal conductivity* (mW*/*m·K)*** | ***Compression Modulus*** *(MPa)*** |
|---|---|---|---|---|
| Acetone | 0.09 | 3.7 | 39.1 | 67.7 |

| | | | | |
|---|---|---|---|---|
| *Thermal conductivity measured with the C-Therm TCi according to the method described above. **Mechanical properties determined in accordance with ASTM D1621 | | | | |

## Claims

1. An aerogel obtained by reacting
- silanol moieties on a surface of a clay;
- an isocyanate compound A;
- an isocyanate compound B;
- a cyclic ether compound, said cyclic ether compound being an epoxy compound or an oxetane compound;
- a solvent A; and
- a solvent B.

2. An aerogel according to claim 1, wherein said aerogel is obtained in the presence of a catalyst.

3. An aerogel according to claim 1 or claim 2, wherein said isocyanate compound A and isocyanate compound B are independently an aromatic isocyanate compound or an aliphatic isocyanate compound, preferably said isocyanate compound A is an aromatic isocyanate compound and said isocyanate compound B is an aliphatic isocyanate compound.

4. An aerogel according to any one of claims 1 to 3, wherein said isocyanate compound A and isocyanate compound B are independently selected from the group consisting of:
OCN-R¹-NCO (1) 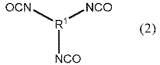 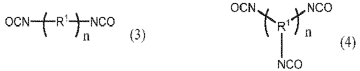 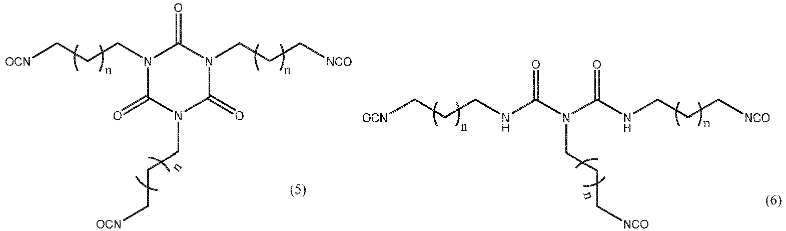 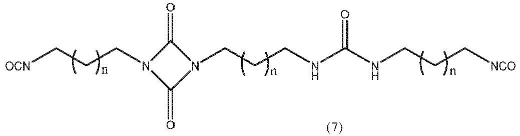 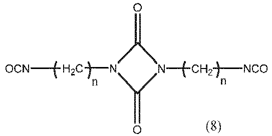
wherein R¹ is selected from the group consisting of a single bonded -O-, -S-, -C(O)-, -S(O)₂-, - S(PO₃)-, a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group and a combination thereof; and an integer n is from 1 to 30; 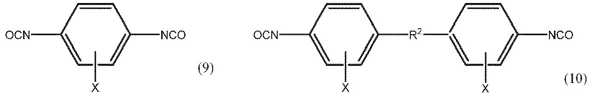 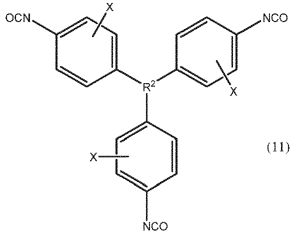 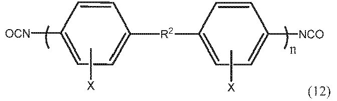
wherein X represents a substituent, or different substituents and are selected independently from the group consisting of hydrogen, halogen and linear or branched C1-C6 alkyl groups, attached on their respective phenyl ring at the 2-position, 3-position or 4-position, and their respective isomers,
R² is selected from the group consisting of a single bonded -O-, -S-, -C(O)-, -S(O)₂-, -S(PO₃)-, a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group from and a combination thereof; and
an integer n is from 1 to 30; 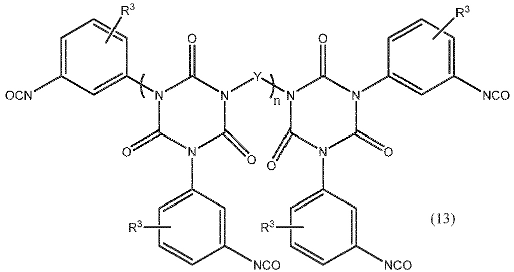
wherein R³ is selected independently from the group consisting of alkyl, hydrogen and alkenyl,
Y is selected from the group consisting of 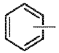 and 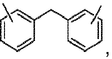 and n is an integer from 0 to 3; 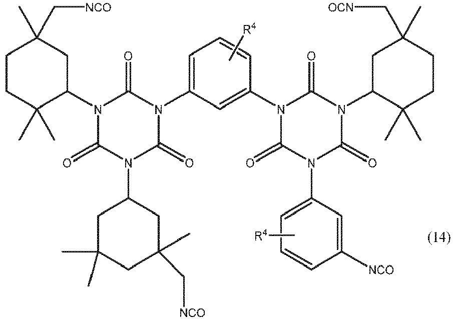 wherein R⁴ is selected independently from the group consisting of alkyl, hydrogen and alkenyl, preferably isocyanate compound A and isocyanate compound B are independently selected from the group consisting of 1,3,5-tris(6-isocyanatohexyl)-1,3,5-triazinane-2,4,6-trione, 6-[3-(6-isocyanatohexyl)-2,4-dioxo-1,3-diazetidin-1-yl]hexyl N-(6-isocyanatohexyl) carbamate, 1,6-diisocyanatohexane, methylene diphenyl diisocyanate, 1-[bis(4-isocyanatophenyl)methyl]-4-isocyanatobenzene, 2,4-diisocyanato-1-methyl-benzene, oligomers of the above-mentioned and mixtures thereof.

5. An aerogel according to any one of claims 1 to 4, wherein said cyclic ether compound is an epoxy compound-selected from the group consisting of 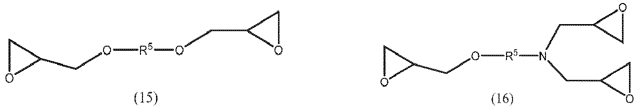 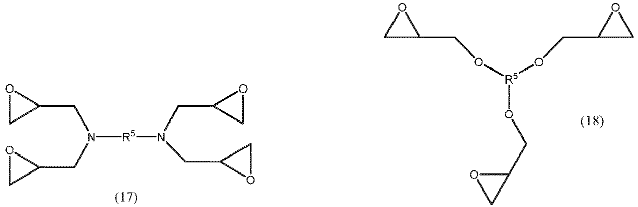 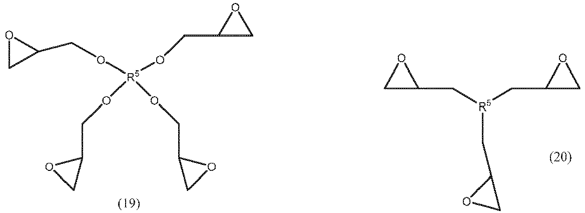 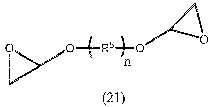
wherein R⁵ is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group; and
n is an integer from 1 to 30; 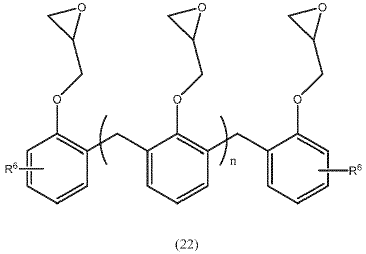 wherein R⁶ is selected independently from the group consisting of hydrogen, halogen, alkyl and alkenyl; and n is an integer from 1 to 10; 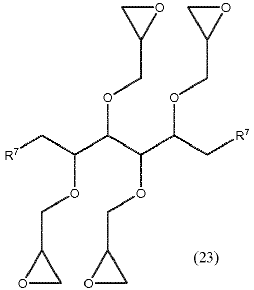
wherein R⁷ is selected independently from the group consisting of hydrogen, hydroxyl, halogen, alkyl and alkenyl; 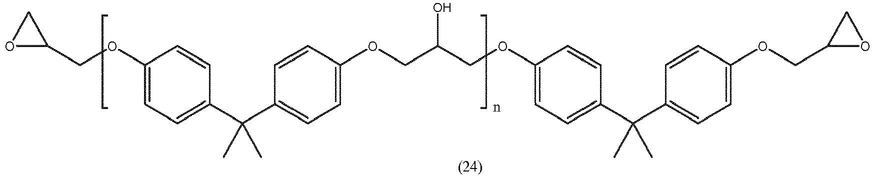
wherein n is an integer from 0 to 16; and
preferably said epoxy compound is selected from the group consisting of N,N-diglycidyl-4-glycidyloxyaniline, sorbitol glycidyl ether-aliphatic polyfunctional epoxy resin, 4,4'-methylenebis(*N*,*N*-diglycidylaniline), 2-[[4-[2-[4-(oxiran-2-ylmethoxy)phenyl]propan-2-yl]phenoxy]methyl]oxirane and poly[(o-cresyl glycidyl ether)-co-formaldehyde];
or said cyclic ether compound is an oxetane compound selected from the group consisting of 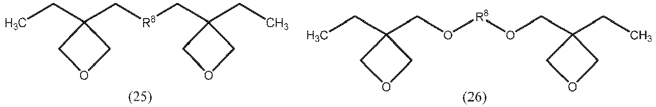 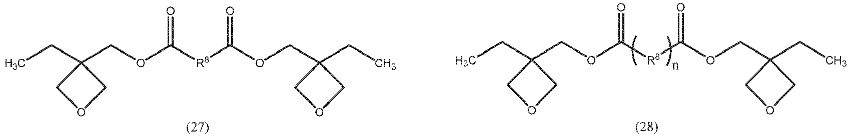 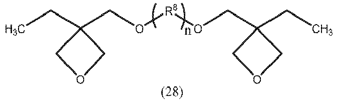
wherein R⁸ is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group; and
n is an integer from 1 to 30; and
preferably said oxetane compound is selected from the group consisting of 1,4-bis[(3-ethyl-3-oxetanylmethoxy)methyl]benzene and bis[1-ethyl(3-oxetanyl)]methyl ether.

6. An aerogel according to any one of claims 1 to 5, wherein said clay is a phyllosilicate mineral species, preferably selected from the group consisting of 2:1 laminar silicates, and more preferably from the subgroup of montmorillonite or sepiolite and mixtures thereof.

7. An aerogel according to any one of claims 1 to 6, wherein said solvent A and solvent B are polar solvents, preferably polar aprotic solvents, more preferably solvent A and solvent B are independently selected from the group consisting of dimethylacetamide (DMAc), dimethylformamide (DMF), 1-methyl-2-pyrrolidinone (NMP), dimethyl sulfoxide (DMSO), acetonitrile, acetone, methyl ethyl ketone (MEK), methyl isobutyl ketone (MIBK) and mixtures thereof.

8. An aerogel according to any one of claims 2 to 7, wherein said catalyst is selected from the group consisting of alkyl amines, aromatic amines, imidazole derivatives, aza compounds, guanidine derivatives and amidines, preferably said catalyst is selected from the group consisting of triethylamine, trimethylamine, benzyldimethylamine (DMBA), N,N-dimethyl-1-phenylmethanamine, 2-ethyl-4-methylimidazole, 2-phenylimidazole, 2-methylimidazole, 1-methylimidazole, 4,4'-methylene-bis(2-ethyl-5-methylimidazole), 3,4,6,7,8,9-hexahydro-2H-pyrimido[1,2-a]pyrimidine, 2,3,4,6,7,8,9,10-octahydropyrimido [1,2-a]azepine, 1,8-diazabicyclo[5.4.0]undec-7-ene (DBU), 1,5,7-triazabicyclo[4.4.0]dec-5-ene (TBD), 1,4-diazabicyclo[2.2.2]octane (DABCO), 1,5-diazabicyclo[4.3.0]non-5-ene, quinuclidine, dibutyltin dilaurate (DBTDL) and mixtures thereof.

9. An aerogel according to any one of claims 1 to 8, wherein the equivalent ratio of epoxy or oxetane groups to isocyanate groups of isocyanate compound A is 15:1 - 1:15, preferably 10:1 - 1:10, more preferably 5:1 - 1:5.

10. An aerogel according to any one of claims 1 to 9, wherein the clay content is from 0.5 to 30% by weight of the weight of the initial solvent B, preferably from 0.5 to 20% by weight, and more preferably from 0.5 to 10% by weight.

11. An aerogel according to any one of claims 2 to 10, wherein the catalyst content is from 0.01 to 30% by weight of the total weight of isocyanate compound A and said cyclic ether compound, preferably from 0.1% to 20% by weight, more preferably from 1% to 15% by weight, and even more preferably from 1% to 10% by weight.

12. An aerogel according to any one of claims 1 to 11, wherein:
isocyanate compound A content is from 0.1 to 65% based on the weight of the solvent A, preferably from 1 to 40% and more preferably from 2 to 30%; and
isocyanate compound B content is from 1 to 60% based on the weight of the solvent B, preferably from 2 to 40% and more preferably from 5 to 25%.

13. An aerogel according to any one of claims 1 to 12, wherein said aerogel has a solid content from 4 to 32%, based on total weight of the total initial solution (solution A and solution B), preferably from 5 to 20%, more preferably from 5 to 10%.

14. An aerogel according to any one of claims 1 to 13, wherein the volumetric ratio of solvent A to solvent B is from 10:1 to 1:10, preferably from 6:1 to 1: 6, and more preferably from 3:1 to 1:3.

15. A thermal insulating material and/or an acoustic insulating material comprising an aerogel according to any one of claims 1 to 14.

16. Use of an aerogel according to any one of claims 1 to 14 as a thermal insulating material and/or acoustic insulating material.

17. A method for preparing an aerogel as defined in any one of claims 1 to 14, said method comprising the steps of:
1) adding a clay into the mixture of solvent A and solvent B and mixing at high shear rates;
2) dissolving a cyclic ether compound into the mixture prepared in step 1;
3) adding an isocyanate compound B and mixing;
4) adding an isocyanate compound A and mixing;
5) adding a catalyst if present and mixing;
6) letting the mixture to stand in order to form a gel;
7) exchanging the solvent of said gel with a solvent; and
8) drying said gel by supercritical or ambient drying.

## Patentansprüche

1. Aerogel, erhalten durch Umsetzen von
- Silanolmolekülteilen auf einer Oberfläche eines Tons;
- einer Isocyanatverbindung A;
- einer Isocyanatverbindung B;
- einer cyclischen Etherverbindung, wobei die cyclische Etherverbindung eine Epoxidverbindung oder eine Oxetanverbindung ist;
- eines Lösungsmittels A; und
- eines Lösungsmittels B.

2. Aerogel nach Anspruch 1, wobei das Aerogel in der Gegenwart eines Katalysators erhalten wird.

3. Aerogel nach Anspruch 1 oder 2, wobei die Isocyanatverbindung A und die Isocyanatverbindung B unabhängig eine aromatische Isocyanatverbindung oder eine aliphatische Isocyanatverbindung sind, wobei bevorzugt die Isocyanatverbindung A eine aromatische Isocyanatverbindung und die Isocyanatverbindung B eine aliphatische Isocyanatverbindung ist.

4. Aerogel nach einem der Ansprüche 1 bis 3, wobei die Isocyanatverbindung A und die Isocyanatverbindung B unabhängig aus der Gruppe ausgewählt sind, die aus Folgendem besteht:
OCN-R¹-NCO (1) 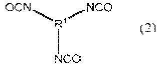 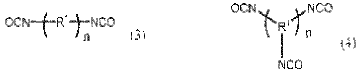 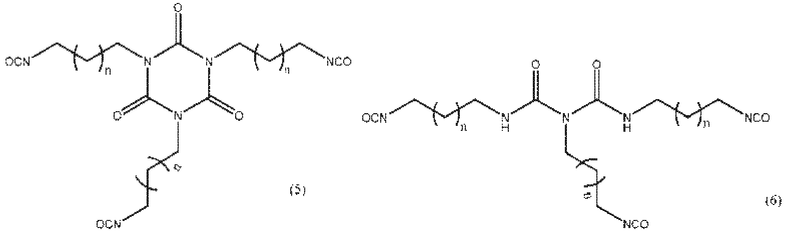 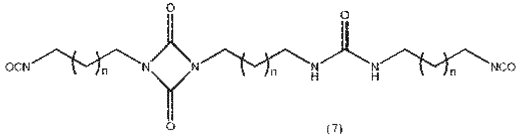 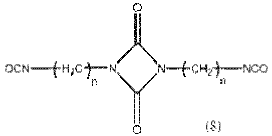
wobei R¹ aus der Gruppe ausgewählt ist, die aus Folgendem besteht: einem einfach gebundenen -O-, -S-, -C(O)-, -S(O)₂-, -S(PO₃)-, einer substituierten oder unsubstituierten C1-C30-Alkylgruppe, einer substituierten oder unsubstituierten C3-C30-Cycloalkylgruppe, einer substituierten oder unsubstituierten Arylgruppe, einer substituierten oder unsubstituierten C7-C30-Alkylarylgruppe, einer substituierten oder unsubstituierten C3-C30-Heterocycloalkylgruppe und einer substituierten oder unsubstituierten C1-C30-Heteroalkylgruppe und einer Kombination davon; und
wobei eine ganze Zahl n von 1 bis 30 ist; 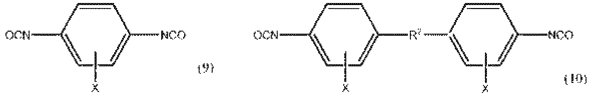 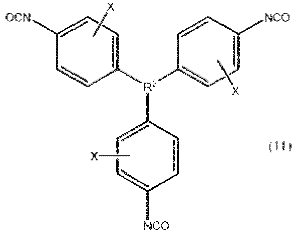 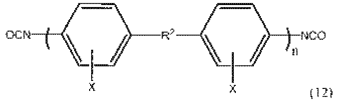
wobei X einen Substituenten oder verschiedene Substituenten darstellt und die unabhängig aus der Gruppe ausgewählt sind, die aus Folgendem besteht: Wasserstoff, Halogen oder linearen oder verzweigten C1-C6-Alkylgruppen, die an ihrem jeweiligen Phenylring an der 2-Position, 3-Position oder 4-Position und ihren jeweiligen Isomeren befestigt sind, wobei R² aus der Gruppe ausgewählt ist, die aus Folgendem besteht: einem einfach gebundenen -O-, -S-, -C(O)-, -S(O)₂-, -S(PO₃)-, einer substituierten oder unsubstituierten C1-C30-Alkylgruppe, einer substituierten oder unsubstituierten C3-C30-Cycloalkylgruppe, einer substituierten oder unsubstituierten Arylgruppe, einer substituierten oder unsubstituierten C7-C30-Alkylarylgruppe, einer substituierten oder unsubstituierten C3-C30-Heterocycloalkylgruppe und einer substituierten oder unsubstituierten C1-C30-Heteroalkylgruppe aus und einer Kombination davon; und
wobei eine ganze Zahl n von 1 bis 30 ist; 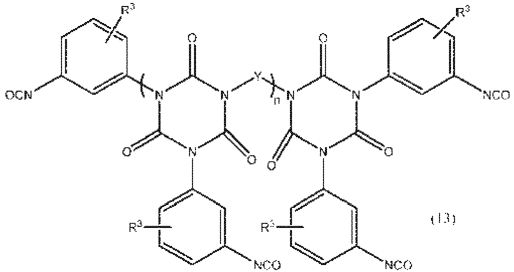
wobei R³ unabhängig aus der Gruppe ausgewählt ist, die aus Folgendem besteht: Alkyl, Wasserstoff und Alkenyl, wobei Y aus der Gruppe ausgewählt ist, die aus Folgendem besteht: 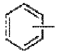 und 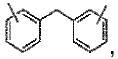 und wobei n eine ganze Zahl von 0 bis 3 ist; 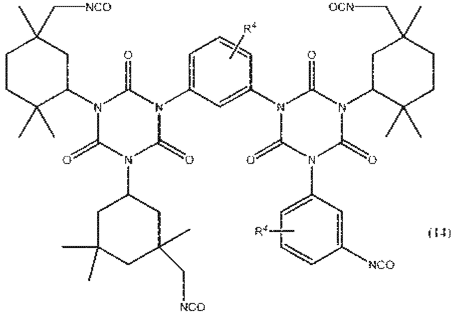
wobei R⁴ unabhängig aus der Gruppe ausgewählt ist, die aus Folgendem besteht: Alkyl, Wasserstoff und Alkenyl, wobei bevorzugt Isocyanatverbindung A und Isocyanatverbindung B unabhängig aus der Gruppe ausgewählt sind, die aus Folgendem besteht: 1,3,5-tris(6-Isocyanatohexyl)-1,3,5-triazinan-2,4,6-trion, 6-[3-(6-isocyanatohexyl)-2,4-dioxo-1,3-diazetidin-1-yl]hexyl N-(6-isocyanatohexyl)carbamat, 1,6-Diisocyanatohexan, Methylendiphenyldiisocyanat, 1-[bis(4-isocyanatophenyl)methyl]-4-isocyanatobenzen, 2,4-Diisocyanato-1-methylbenzen, Oligomeren der oben Genannten und Gemischen davon.

5. Aerogel nach einem der Ansprüche 1 bis 4, wobei die cyclische Etherverbindung eine Epoxidverbindung ist, die aus der Gruppe ausgewählt ist, die aus Folgendem besteht: 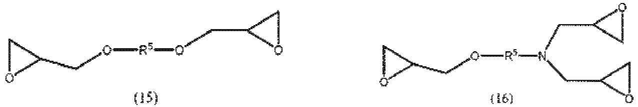 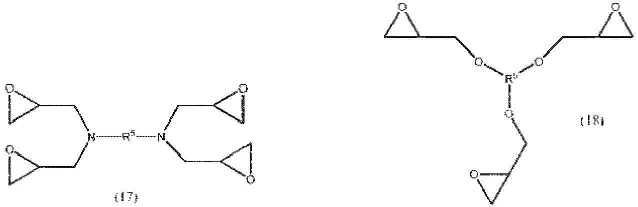 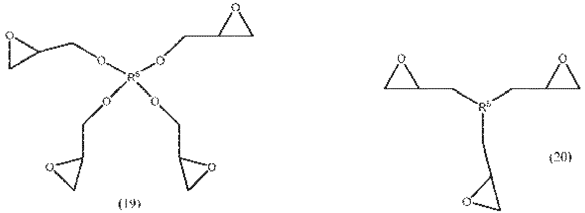 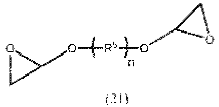
wobei R⁵ aus der Gruppe ausgewählt ist, die aus Folgendem besteht: einer substituierten oder unsubstituierten C1-C30-Alkylgruppe, einer substituierten oder unsubstituierten C3-C30-Cycloalkylgruppe, einer substituierten oder unsubstituierten Arylgruppe, einer substituierten oder unsubstituierten C7-C30-Alkylarylgruppe, einer substituierten oder unsubstituierten C3-C30-Heterocycloalkylgruppe und einer substituierten oder unsubstituierten C1-C30-Heteroalkylgruppe; und
wobei n eine ganze Zahl von 1 bis 30 ist; 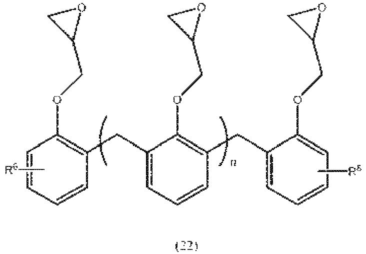
wobei R⁶ unabhängig aus der Gruppe ausgewählt ist, die aus Wasserstoff, Halogen, Alkyl und Alkenyl besteht; und
wobei n eine ganze Zahl von 1 bis 10 ist; 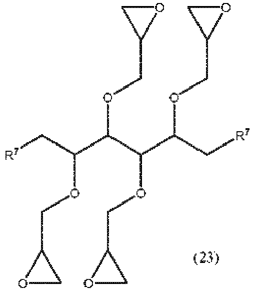
wobei R⁷ unabhängig aus der Gruppe ausgewählt ist, die aus Wasserstoff, Hydroxyl, Halogen, Alkyl und Alkenyl besteht; 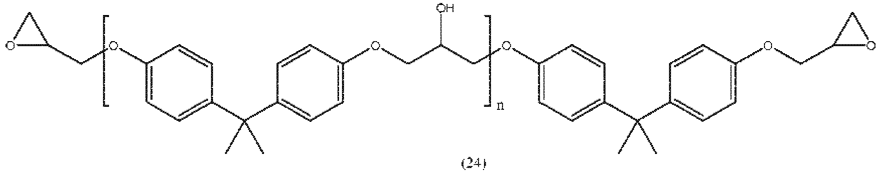
wobei n eine ganze Zahl von 0 bis 16 ist; und
wobei bevorzugt die Epoxidverbindung aus der Gruppe ausgewählt ist, die aus Folgendem besteht: N,N-Diglycidyl-4-glycidyloxyanilin, Sorbitolglycidyletheraliphatischem polyfunktionellem Epoxidharz, 4,4'-Methylenbis(*N*,*N*-diglycidylanilin), 2-[[4-[2-[4-(Oxiran-2-ylmethoxy)phenyl]propan-2-yl]phenoxy]methyl]oxiran und Poly[(o-cresylglycidylether)-co-formaldehyd]; oder
die cyclische Etherverbindung eine Oxetanverbindung ist, die aus der Gruppe ausgewählt ist, die aus Folgendem besteht: 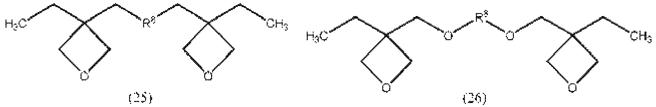 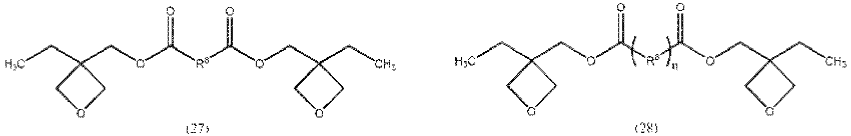 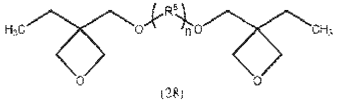
wobei R⁸ aus der Gruppe ausgewählt ist, die aus Folgendem besteht: einer substituierten oder unsubstituierten C1-C30-Alkylgruppe, einer substituierten oder unsubstituierten C3-C30-Cycloalkylgruppe, einer substituierten oder unsubstituierten Arylgruppe, einer substituierten oder unsubstituierten C7-C30-Alkylarylgruppe, einer substituierten oder unsubstituierten C3-C30-Heterocycloalkylgruppe und einer substituierten oder unsubstituierten C1-C30-Heteroalkylgruppe; und
n eine ganze Zahl von 1 bis 30 ist; und
wobei bevorzugt die Oxetanverbindung aus der Gruppe ausgewählt ist, die aus Folgendem besteht: 1,4-bis[(3-Ethyl-3-oxetanylmethoxy)methyl]benzen und bis[1-Ethyl(3-oxetanyl)]methylether.

6. Aerogel nach einem der Ansprüche 1 bis 5, wobei derTon eine Schichtsilicatmineralart ist, die bevorzugt aus der Gruppe ausgewählt ist, die aus Folgendem besteht:
laminaren Silicaten im Verhältnis 2:1 und weiter bevorzugt aus der Untergruppe von Montmorillonit oder Sepiolit und Gemischen davon.

7. Aerogel nach einem der Ansprüche 1 bis 6, wobei das Lösungsmittel A und das Lösungsmittel B polare Lösungsmittel sind, bevorzugt polare aprotische Lösungsmittel, wobei weiter bevorzugt Lösungsmittel A und Lösungsmittel B unabhängig aus der Gruppe ausgewählt sind, die aus Folgendem besteht: Dimethylacetamid (DMAc), Dimethylformamid (DMF), 1-Methyl-2-pyrrolidinon (NMP), Dimethylsulfoxid (DMSO), Acetonitril, Aceton, Methylethylketon (MEK), Methylisobutylketon (MIBK) und Gemischen davon.

8. Aerogel nach einem der Ansprüche 2 bis 7, wobei der Katalysator aus der Gruppe ausgewählt ist, die aus Folgendem besteht: Alkylaminen, aromatischen Aminen, Imidazolderivaten, Azaverbindungen, Guanidinderivaten und Amidinen, wobei bevorzugt der Katalysator aus der Gruppe ausgewählt ist, die aus Folgendem besteht: Triethylamin, Trimethylamin, Benzyldimethylamin (DMBA), N,N-Dimethyl-1-Phenylmethanamin, 2-Ethyl-4-methylimidazol, 2-Phenylimidazol, 2-Methylimidazol, 1-Methylimidazol, 4,4'-Methylen-bis(2-ethyl-5-methylimidazol), 3,4,6,7,8,9-Hexahydro-2H-pyrimido[1,2-a]pyrimidin, 2,3,4,6,7,8,9,10-Octahydropyrimido[1,2-a]azepin, 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), 1,5-Diazabicyclo[4.3.0]non-5-en, Chinuclidin, Dibutylzinndilaurat (DBTDL) und Gemischen davon.

9. Aerogel nach einem der Ansprüche 1 bis 8, wobei das Äquivalentverhältnis von Epoxid- oder Oxetangruppen zu Isocyanatgruppen der Isocyanatverbindung A 15:1-1:15, bevorzugt 10:1-1:10, weiter bevorzugt 5:1-1:5, ist.

10. Aerogel nach einem der Ansprüche 1 bis 9, wobei der Tongehalt von 0,5 bis 30 Gew.-% des Gewichts des anfänglichen Lösungsmittels B, bevorzugt von 0,5 bis 20 Gew.-% und weiter bevorzugt von 0,5 bis 10 Gew.-%, beträgt.

11. Aerogel nach einem der Ansprüche 2 bis 10, wobei der Katalysatorgehalt von 0,01 bis 30 Gew.-% des Gesamtgewichts von Isocyanatverbindung A und der cyclischen Etherverbindung, bevorzugt von 0,1 Gew.-% bis 20 Gew.-%, weiter bevorzugt von 1 Gew.-% bis 15 Gew.-% und noch weiter bevorzugt von 1 Gew.-% bis 10 Gew.-%, beträgt.

12. Aerogel nach einem der Ansprüche 1 bis 11, wobei:
der Gehalt an Isocyanatverbindung A von 0,1 bis 65 %, basierend auf dem Gewicht des Lösungsmittels A, bevorzugt von 1 bis 40 % und weiter bevorzugt von 2 bis 30 %, beträgt; und
der Gehalt an Isocyanatverbindung B von 1 bis 60 %, basierend auf dem Gewicht des Lösungsmittels B, bevorzugt von 2 bis 40 % und weiter bevorzugt von 5 bis 25 %, beträgt.

13. Aerogel nach einem der Ansprüche 1 bis 12, wobei das Aerogel einen Feststoffgehalt von 4 bis 32 %, basierendem auf dem Gesamtgewicht der gesamten anfänglichen Lösung (Lösung A und Lösung B), bevorzugt von 5 bis 20 %, weiter bevorzugt von 5 bis 10 %, aufweist.

14. Aerogel nach einem der Ansprüche 1 bis 13, wobei das volumetrische Verhältnis von Lösungsmittel A zu Lösungsmittel B 10:1 bis 1:10, bevorzugt von 6:1 bis 1:6 und weiter bevorzugt von 3:1 bis 1:3, beträgt.

15. Wärmeisolierendes Material und/oder schallisolierendes Material, umfassend ein Aerogel nach einem der Ansprüche 1 bis 14.

16. Verwenden eines Aerogels nach einem der Ansprüche 1 bis 14 als ein wärmeisolierendes Material und/oder schallisolierendes Material.

17. Verfahren zum Herstellen eines Aerogels nach einem der Ansprüche 1 bis 14, wobei das Verfahren die folgendem Schritte umfasst:
1) Hinzufügen eines Tons zu dem Gemisch aus Lösungsmittel A und Lösungsmittel B und Mischen bei hohen Schergeschwindigkeiten;
2) Lösen einer cyclischen Etherverbindung in dem in Schritt 1 hergestellten Gemisch;
3) Hinzufügen einer Isocyanatverbindung B und Mischen;
4) Hinzufügen einer Isocyanatverbindung A und Mischen;
5) Hinzufügen eines Katalysators, falls gegenwärtig, und Mischen;
6) Stehenlassen des Gemisches, um ein Gel auszubilden;
7) Austauschen des Lösungsmittels des Gels gegen ein Lösungsmittel; und
8) Trocknen des Gels durch überkritisches Trocknen oder Trocknen bei Umgebungsbedingungen.

## Revendications

1. Aérogel obtenu par réaction
- de fragments de silanol sur une surface d'une argile ;
- d'un composé isocyanate A ;
- d'un composé isocyanate B ;
- d'un composé éther cyclique, ledit composé éther cyclique étant un composé époxy ou un composé oxétane ;
- d'un solvant A ; et
- d'un solvant B.

2. Aérogel selon la revendication 1, dans lequel ledit aérogel est obtenu en présence d'un catalyseur.

3. Aérogel selon la revendication 1 ou la revendication 2, dans lequel ledit composé isocyanate A et le composé isocyanate B sont indépendamment un composé isocyanate aromatique ou un composé isocyanate aliphatique, de préférence ledit composé isocyanate A est un composé isocyanate aromatique et ledit composé isocyanate B est un composé isocyanate aliphatique.

4. Aérogel selon l'une quelconque des revendications 1 à 3, dans lequel ledit composé isocyanate A et ledit composé isocyanate B sont choisis indépendamment dans le groupe constitué par :
OCN-R¹-NCO (1) 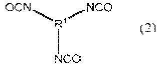 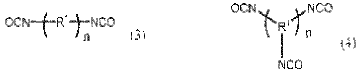 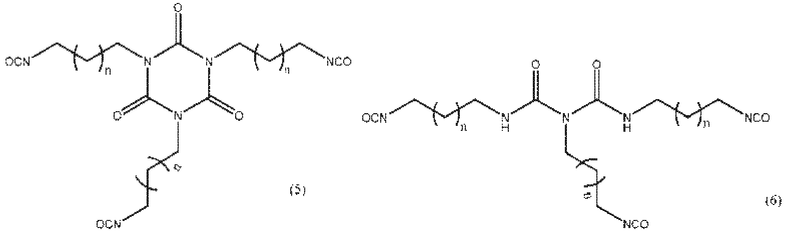 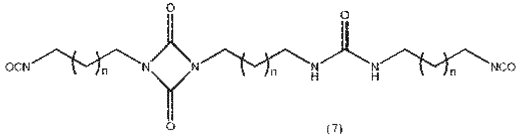 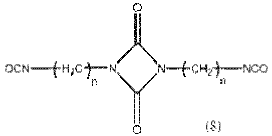
dans lequel R¹ est choisi dans le groupe constitué d'une simple liaison -O-, -S-, -C(O)-, -S(O)₂-, - S(PO₃)-, d'un groupe alkyle en C1 à C30 substitué ou non substitué, d'un groupe cycloalkyle en C3 à C30 substitué ou non substitué, d'un groupe aryle substitué ou non substitué, d'un groupe alkylaryle en C7 à C30 substitué ou non substitué, d'un groupe hétérocycloalkyle en C3 à C30 substitué ou non substitué et d'un groupe hétéroalkyle en C1 à C30 substitué ou non substitué et d'une combinaison
de ceux-ci ; et un nombre entier n est compris entre 1 et 30 ; 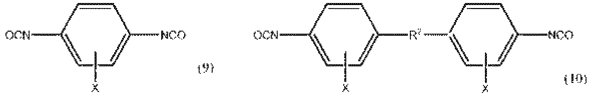 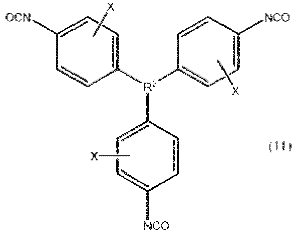 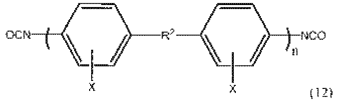
dans lequel X représente un substituant, ou différents substituants, et sont choisis indépendamment dans le groupe constitué par l'hydrogène, l'halogène et les groupes alkyle en C1 à C6 linéaires ou ramifiés, fixés sur leur cycle phénylique respectif en position 2, en position 3 ou en position 4, et leurs isomères respectifs, R² est choisi dans le groupe constitué par une simple liaison -O-, -S-, -C(O)-, -S(O)₂-, -S(PO₃)-, un groupe alkyle en C1 à C30 substitué ou non substitué, un groupe cycloalkyle en C3 à C30 substitué ou non substitué, un groupe aryle substitué ou non substitué, un groupe alkylaryle en C7 à C30 substitué ou non substitué, un groupe hétérocycloalkyle en C3 à C30 substitué ou non substitué et un groupe hétéroalkyle en C1 à C30 substitué ou non substitué et d'une combinaison de ceux-ci ; et un nombre entier n est compris entre 1 et 30 ; 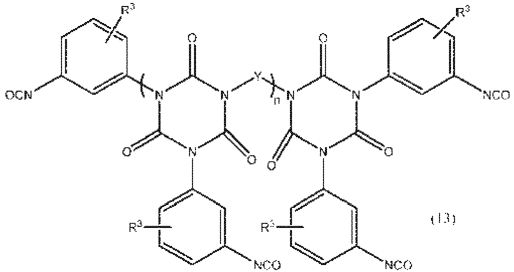
dans lequel R³ est choisi indépendamment dans le groupe constitué par l'alkyle, l'hydrogène et l'alcényle, Y est choisi dans le groupe constitué par 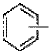 et 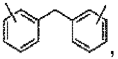 et n est un nombre entier compris entre 0 et 3 ; 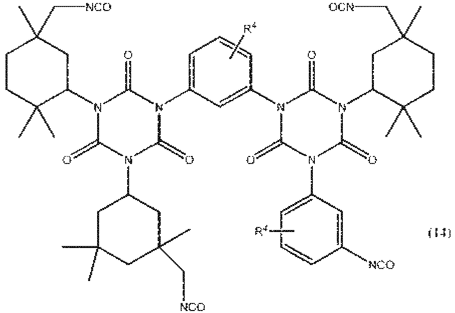
dans lequel R⁴ est choisi indépendamment dans le groupe constitué par l'alkyle, l'hydrogène et l'alcényle, de préférence le composé isocyanate A et le composé isocyanate B sont choisis indépendamment dans le groupe constitué par le 1,3,5-tris(6-isocyanatohexyl)-1,3,5-triazinane-2,4,6-trione, le 6-[3-(6-isocyanatohexyl)-2,4-dioxo-1,3-diazétidin-1-yl]hexyl N-(6-isocyanatohexyl)carbamate, le 1,6-diisocyanatohexane, le méthylène diphényl diisocyanate, le 1-[bis (4-isocyanatophényle)méthyl]-4-isocyanatobenzène, le 2,4-diisocyanato-1-méthyl-benzène, des oligomères des composés mentionnés ci-dessus et des mélanges de ceux-ci.

5. Aérogel selon l'une quelconque des revendications 1 à 4, dans lequel ledit composé éther cyclique est un composé époxy choisi dans le groupe constitué par 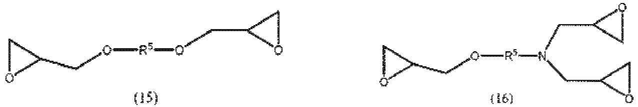 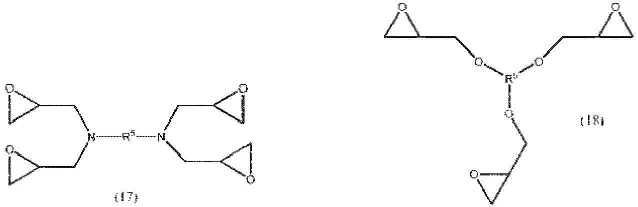 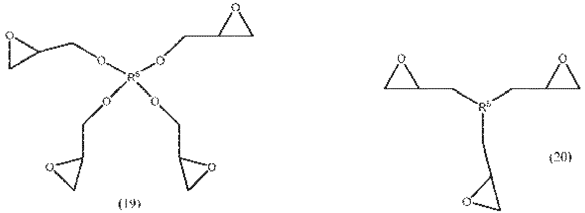 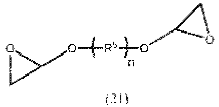 dans lequel R⁵ est choisi dans le groupe constitué par un groupe alkyle en C1 à C30 substitué ou non substitué, un groupe cycloalkyle en C3 à C30 substitué ou non substitué, un groupe aryle substitué ou non substitué, un groupe alkylaryle en C7 à C30 substitué ou non substitué, un groupe hétérocycloalkyle en C3 à C30 substitué ou non substitué et un groupe hétéroalkyle en C1 à C30 substitué ou non substitué ; et n est un nombre entier compris entre 1 et 30 ; 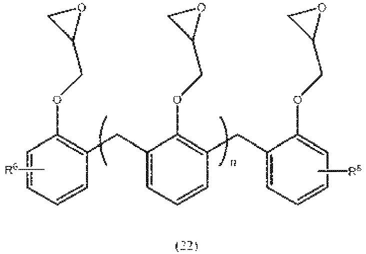 dans lequel R⁶ est choisi indépendamment dans le groupe constitué par l'hydrogène, l'halogène, l'alkyle et l'alcényle ; et n est un nombre entier compris entre 1 et 10 ; 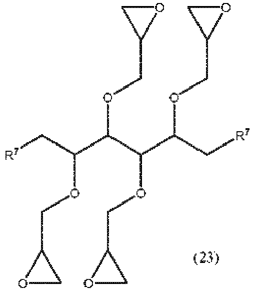 dans lequel R⁷ est choisi indépendamment dans le groupe constitué par l'hydrogène, l'hydroxyle, l'halogène, l'alkyle et l'alcényle ; 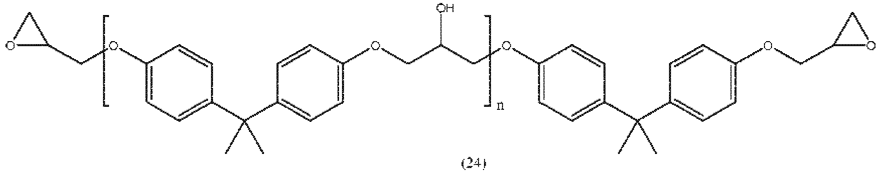
dans lequel n est un nombre compris entre 0 et 16 ; et
de préférence ledit composé époxy est choisi dans le groupe constitué par la N,N-diglycidyle-4-glycidyloxyaniline, la résine époxy polyfonctionnelle sorbitol glycidyl-éther-aliphatique, la 4,4'-méthylènebis(*N*,*N*-diglycidylaniline), l'2-[[4-[2-[4-(oxirane-2-ylméthoxy)phényl]propan-2-yl]phénoxy]méthyl]oxirane et le poly[(*o*-crésyl glycidyl-éther)-co-formaldéhyde] ;
ou ledit composé éther cyclique est un composé oxétane choisi dans le groupe constitué par 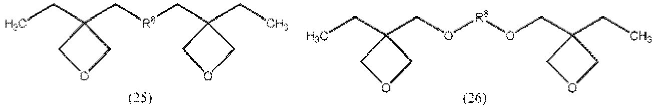 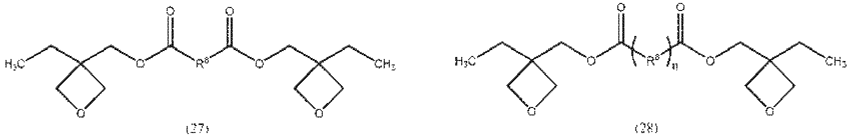 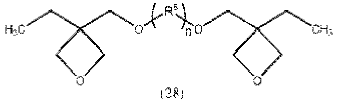
dans lequel R⁸ est choisi dans le groupe constitué par un groupe alkyle en C1 à C30 substitué ou non substitué, un groupe cycloalkyle en C3 à C30 substitué ou non substitué, un groupe aryle substitué ou non substitué, un groupe alkylaryle en C7 à C30 substitué ou non substitué, un groupe hétérocycloalkyle en C3 à C30 substitué ou non substitué et un groupe hétéroalkyle en C1 à C30 substitué ou non substitué ; et n est un nombre entier compris entre 1 et 30 ; et
de préférence ledit composé oxétane est choisi dans le groupe constitué par le 1,4-bis[(3-éthyl-3-oxétanylméthoxy)méthyl]benzène et de le bis[1-éthyl(3-oxétanyl)]méthyle éther.

6. Aérogel selon l'une quelconque des revendications 1 à 5, dans lequel ladite argile est une espèce minérale de phyllosilicate, de préférence choisie dans le groupe constitué par les silicates laminaires 2:1, et plus préférablement dans le sous-groupe de montmorillonite ou de sépiolite et des mélanges de ceux-ci.

7. Aérogel selon l'une quelconque des revendications 1 à 6, dans lequel ledit solvant A et ledit solvant B sont des solvants polaires, de préférence des solvants aprotiques polaires, plus préférablement le solvant A et le solvant B sont choisis indépendamment dans le groupe constitué par le diméthylacétamide (DMAc), le diméthylformamide (DMF), le 1-méthyl-2-pyrrolidinone (NMP), le diméthylsulfoxyde (DMSO), l'acétonitrile, l'acétone, la méthyléthylcétone (MEK), la méthyleisobutylcétone (MIBK) et des mélanges de ceux-ci.

8. Aérogel selon l'une quelconque des revendications 2 à 7, dans lequel ledit catalyseur est choisi dans le groupe constitué par les alkylamines, les amines aromatiques, les dérivés d'imidazole, les composés aza, les dérivés de guanidine et les amidines, de préférence ledit catalyseur est choisi dans le groupe constitué par la triéthylamine, la triméthylamine, la benzyldiméthylamine (DMBA), la N,N-diméthyl-1-phénylméthanamine, le 2-éthyl-4-méthylimidazole, le 2-phénylimidazole, le 2-méthylimidazole, le 1-méthylimidazole, le 4,4'-méthylènebis(2-éthyl-5-méthylimidazole), le 3,4,6,7,8,9-hexahydro-2H-pyrimido[1,2-a]pyrimidine, la 2,3,4,6,7,8,9,10-octahydropyrimido [1,2-a] azépine, le 1,8-diazabicyclo[5.4.0]undéc-7-ène(DBU), le 1,5,7-triazabicyclo[4.4.0] déc-5-ène (TBD), le 1,4-diazabicyclo[2.2.2]octane (DABCO), le 1,5-diazabicyclo[4.3.0]non-5-ène, la quinuclidine, le dilaurate de dibutyltine (DBTDL) et des mélanges de ceux-ci.

9. Aérogel selon l'une quelconque des revendications 1 à 8, dans lequel le rapport équivalent des groupes époxy ou oxétane aux groupes isocyanate du composé isocyanate A est de 15:1 à 1:15, de préférence de 10:1 à 1:10, plus préférablement de 5:1 à 1:5.

10. Aérogel selon l'une quelconque des revendications 1 à 9, dans lequel la teneur en argile est de 0,5 à 30 % en poids du poids du solvant initial B, de préférence de 0,5 à 20 % en poids, et plus préférablement de 0,5 à 10 % en poids.

11. Aérogel selon l'une quelconque des revendications 2 à 10, dans lequel la teneur en catalyseur est de 0,01 à 30 % en poids du poids total du composé isocyanate A et dudit composé éther cyclique, de préférence de 0,1 à 20 % en poids, plus préférablement de 1 à 15 % en poids, et encore plus préférablement de 1 à 10 % en poids.

12. Aérogel selon l'une quelconque des revendications 1 à 11, dans lequel :
la teneur en composé d'isocyanate A est de 0,1 à 65 % par rapport au poids du solvant A, de préférence de 1 à 40 % et plus préférablement de 2 à 30 % ; et
la teneur en composé d'isocyanate B est de 1 à 60 % par rapport au poids du solvant B, de préférence de 2 à 40 % et plus préférablement de 5 à 25 %.

13. Aérogel selon l'une quelconque des revendications 1 à 12, dans lequel ledit aérogel a une teneur en matières solides de 4 à 32 %, par rapport au poids total de la solution initiale totale (solution A et solution B), de préférence de 5 à 20 %, plus préférablement de 5 à 10%.

14. Aérogel selon l'une quelconque des revendications 1 à 13, dans lequel le rapport volumétrique du solvant A au solvant B est de 10:1 à 1:10, de préférence de 6:1 à 1:6, et plus préférablement de 3:1 à 1:3.

15. Matériau isolant thermique et/ou matériau isolant acoustique comprenant un aérogel selon l'une quelconque des revendications 1 à 14.

16. Utilisation d'un aérogel selon l'une quelconque des revendications 1 à 14 comme matériau isolant thermique et/ou matériau isolant acoustique.

17. Procédé de préparation d'un aérogel tel que défini selon l'une quelconque des revendications 1 à 14, ledit procédé comprenant les étapes consistant à :
1) ajouter une argile dans le mélange de solvant A et de solvant B et mélanger à des taux de cisaillement élevés ;
2) dissoudre un composé éther cyclique dans le mélange préparé à l'étape 1 ;
3) ajouter un composé isocyanate B et mélanger ;
4) ajouter un composé isocyanate A et mélanger ;
5) ajouter un catalyseur, s'il est présent, et mélanger ;
6) laisser reposer le mélange pour former un gel ;
7) échanger le solvant dudit gel avec un solvant ; et
8) sécher ledit gel par séchage supercritique ou ambiant.
